# EUROPÄISCHE PATENTANMELDUNG

(11) **EP 4 163 212 A1**
(43) Veröffentlichungstag der Anmeldung: **12.04.2023**
(21) Anmeldenummer: 22000222.4
(22) Anmeldetag: 30.09.2022
(51) Int. Cl.: B65B 7/28, B29C 65/36, B67B 3/20

(54) **VERFAHREN UND VORRICHTUNG ZUM ANBRINGEN EINES SIEGELELEMENTS UND EINES, EIN MUTTERGEWINDE AUFWEISENDEN, SCHRAUBDECKELS AN DIE MÜNDUNG EINES BEHÄLTERS**

(30) Priorität: 04.10.2021 DE 102021004966
(71) Anmelder: IMAGINE Engineering GmbH, 50126 Bergheim (DE)
(72) Erfinder: Baltes, Klaus, 50127 Bergheim (DE); Kirchner, Patrick, 97653 Bischofsheim i.d. Rhön (DE); Oberländer, Jan, 40221 Düsseldorf (DE)

(57) **Zusammenfassung**

Die Erfindung betrifft ein Verfahren zum Anbringen eines Siegelelementes und eines, ein Muttergewinde aufweisenden, Schraubdeckels an eine Mündung eines Behälters, wobei die Mündung des Behälters eine Mündungswand umfasst deren Außenseite wenigstens bereichsweise ein Schraubengewinde aufweist und die Mündung wenigstens durch bereichsweises Schmelzen des Siegelelements aufbrechbar versiegelt und durch das Anbringen des Schraubdeckels öffenbar verschlossen wird, umfassend folgende Schritte:
a) Bereitstellen einer Vorrichtung zum Versiegeln und Verschließen von Behältern
b) Bereitstellung eines Schraubdeckels
c) Bereitstellen eines Siegelelements
d) temporäre Einlagerung wenigstens des Schraubdeckels in eine Schraubdeckelaufnahme einer Behalterverschließeinrichtung
e) Auflage des Siegelelements auf die Mündung des Behälters
f) Versiegeln der Mündung des Behälters wenigstens durch bereichsweises Schmelzen des Siegelelements, unter Inanspruchnahme eines ersten Zeitintervalls
g) Positionieren eines Anfangsbereichs des Muttergewindes zu einem Anfangsbereich des Schraubgewindes
h) Verschließen der Mündung des Behälters durch Aufschrauben des Schraubdeckels unter Inanspruchnahme eines zweiten Zeitintervalls.

Es soll ein Verfahren bereit gestellt werden, dass zur wenigstens teilweisen Entschärfung des Energie- und/oder Materialverbrauchs beitragen kann und vorteilhafterweise mit besonders hoher Prozesssicherheit den jeweiligen Qualitätsanforderungen wenigstens genügende, insbesondere qualitativ besonders hochwertige, Siegelungen an Behältern mit Schraubkappenverbindung bereitzustellen vermag. Erfindungsgemäß Wird dazu vorgeschlagen, dass das zweite Zeitintervail wenigstens einen Anteil des ersten Zeitintervalls überdeckt.

Die Erfindung betrifft zudem eine Vorrichtung zum Anbringen eihes Siegelelementes und eines, ein Muttergewinde äufweisenden, Schraubdeckels an eine Mündung eines Behälters.

## Beschreibung

Die Erfindung betrifft ein Verfahren zum Anbringen eines Siegelelementes und eines, ein Muttergewinde aufweisenden, Schraubdeckels an eine Mündung eines Behälters, wobei die Mündung des Behälters eine Mündungswand umfasst deren Außenseite wenigstens bereichsweise ein Schraubengewinde aufweist und die Mündung wenigstens durch bereichsweises Schmelzen des Siegelelements aufbrechbar versiegelt und durch das Anbringen des Schraubdeckels öffenbar verschlossen wird, umfassend folgende Schritte:
a) Bereitstellen einer Vorrichtung zum Versiegeln und Verschließen von Behältern
b) Bereitstellung eines Schraubdeckels
c) Bereitstellen eines Siegelelements
d) temporäre Einlagerung wenigstens des Schraubdeckels in eine Schraubdeckelaufnahme einer Behalterverschließeinrichtung
e) Auflage des Siegelelements auf die Mündung des Behälters
f) Versiegeln der Mündung des Behälters wenigstens durch bereichswelses Schmelzen des Siegelelements, unter Inanspruchnahme eines ersten Zeitintervalls
g) Positionieren eines Anfangsbereichs des Muttergewindes zu einem Anfangsbereich des Schraubgewindes
h) Verschließen der Mündung des Behälters durch Aufschrauben des Schraubdeckels unter Inanspruchnahme eines zweiten Zeitintervalls.

Die Erfindung betrifft weiter eine Vorrichtung zum Anbringen eines Siegelelements und eines, ein Muttergewinde aufweisenden, Schraubdeckels an eine Mündung eines Behälters, wobei die Vorrichtung eine Behälterverschließeinrichtung umfasst, die eine Schraubdeckelaufnahme aufweist, wobei die Schtraubdeckelaufnabme einen Aufnahmeraum zur temporären Einlagerung wenigstens des Schraubdeckels ausbildet, wobei die Vorrichtung ferner eine, einen Wirkbereich aufweisende Schmelzeinheit zur wenigstens bereichsweisen Schmelzung des Siegelelements aufweist.

Verfahren und Vorrichtungen zum Anbringen eines Siegelelements und eines, ein Muttergewinde aufweisenden, Schraubdeckels an eine Mündung eines Behälters sind seit langem bekannt und insbesondere im Zusammenhang mit (industriel) durchgeführten Abfüllprozessen von Verbrauchsgütern und dazu ausgelegten Abfüllanlagen von größerer Bedeutung.

Dabei umfasst die Bandbreite der in diesen Abfüllprozessen zur Anwendung kommenden Verbrauchsgütern Lebensmittel, Medikamente oder einzelne Wirkstoffe, Kosmetikprodukte, industrielle Hilfsmittel, Chemikalien und vieles andere mehr.

Die Verbrauchsgüter können zur Abfüllung in schüttfähiger Form, insbesondere fließ- oder rieselfähig vorliegen, wobei flüssige oder wenigstens zähflüssige Verbrauchsgüter als "fließfähig" zu bezeichnen sind, während Verbrauchsgüter, die in - wenigstens während des Abfüllprozesses- festem Aggregatzustand vorliegen und etwa in Korn-, Granulat- oder Pulverform ausgebildet sein können, als "schüttfähig" zu bezeichnen sind.

Zwar unterscheidet der Fachmann sehr deutlich zwischen denjenigen Vorrichtungen und Verfahren, die zur Bearbeitung von fließfähigen Verbrauchsgütern ausgebildet sind und denjenigen Vorrichtungen und Verfahren, die zur Bearbeitung von rieselfähigen Verbrauchsgütern ausgebildet sind, das vorliegende Verfahren und die vorliegende Vorrichtung sollen zunächstfür die Anwendung aller schüttfähigen, also sowohl für fließfähige, wie auch für rieselfähige Verbrauchsgüter gelten, wenngleich sie besonders vorteilhaft bei den fließfähigen Verbrauchsgütern angewendet werden können.

Das Behältnis dient dem Verbrauchsgut nach dem Abfüllprozess als (wenigstens temporäres) Lager und kann im Anschluss ari den eigentlichen Abfüllvorgang beispielsweise durch einen Schraubdeckel verschlossen werden.

Zwar sind auch andere Abfüllprozesse bekannt, innerhalb deren Verlauf das Verbrauchsgut, das in diesem Zusammenhang vom Fachmann dann auch häufig "Füllgut" genannt wird, beispielsweise von einem noch nicht verschlossenen Boden aus in ein bereits mit einem Schraubdeckel verbundenes Behältnis eingefüllt werden, jedoch haben sich Abfüllprozesse, die das Anbringen eines, ein Muttergewinde aufweisenden, Schraubdeckels an eine Mündung eines zuvor mit Füllgut gefüllten Behälters umfassen, aus verschiedenen Gründen bewährt.

Insbesondere, wenn durch das Schließen des Behälters mit dem Deckel nicht nur ein ungewolltes Austreten bzw, ein Verlust des Füllguts verhindert werden soll, sondern auch das sich im Behälter befindliche Füllgut vor äußeren Einflüssen geschützt werden soll, werden häufig Siegelelemente zur Versiegelung der durch den Schraubdeckel zu verschließenden Mündung des Behälters vorgesehen.

Solche Siegelelemente unterscheiden sich von reinen Dichtelementen dadurch, dass sie zum erstmaligen Öffnen des Behälters, also vor Erstentnahme des Füllguts, "aufgebrochen" werden müssen. Das Vorsehen von Siegelelementen bietet mehrere Vorteile: Zum einen sind Siegelelemente autark in ihrer Wirkung. Die erzielte Dichtigkeit hängt von ihren Siegeleigenschaften ab und wird im Abfüllprozess festgelegt. Insbesondere ist Ihre Dichtigkeit nicht abhängig von der Aufrechterhaltung bestimmter mechanischer Einwirkungen, insbesondere auch nicht von auf sie einwirkenden Presskräften. Zudem ergibt sich durch die Notwendigkeit des "Aüfbrechens" der Siegelung des Siegelelements eine eindeutige Rückmeldung über die Unversehrtheit der an die Verschlossenheit des Behälters gestellten Anforderungen, beispielsweise Hygieneanforderungen, für einen späteren Anwender oder einen nachgelagerten Bearbeitungsprozess. Denn obwohl häufig der Wunsch besteht, das Füllgut temporär verteilt und in mehreren Teilmengen dem Behältnis zu entnehmen, weshalb sich wiederverschließbare Schraubdeckel besonders zum Verschließen der Mündung des Behälters anbieten, besteht eben häufig auch der Wunsch oder sogar die Notwendigkeit, dass das Füllgut nachvollziehbar ununterbrochen gegenüber äußeren Einflüssen bis zur bestimmungsgemäßen Erstanwendung durch einen Verwender oder einen nachgeordneten Bearbeitungsprozess geschützt ist.

Allerdings stellt das Herstellen von Siegelungen mit Siegelelementen an einer Mündung eines Behältnisses stets auch besondere Herausforderungen an die Gestaltung des Abfüllprozesses, im Besonderen also an das entsprechende Verfahren und die entsprechende Vorrichtung zum Anbringen eines Siegelelementes und eines, ein Muttergewinde aufweisenden, Schraubdeckels an eine Mündung eines Behälters: Da zur Herstellung einer Versiegelung der Mündung eines Behälters unter Verwendung eines Siegelelements vollkommen andere Voraussetzungen erfüllt sein müssen, als zur Herstellung eines wiederverschließbaren Verschlusses der Mündung eines Behälters unter Verwendung einer Schraubdeckels setzt dies bei traditionellen Abfüllverfahren auch das Vorsehen der Durchführung zweier separater Verfahrensschritte in zwei voneinander getrennten, eigenständigen Bearbeitungsstationen innerhalb einer Abfüllanlage voraus. Dies erhöht nicht nur den maschinenbaulichen Aufwand und damit verbunden auch die Anschaffungskosten, sondern macht auf Grund des höheren Wartungsbedarfs, des zusätzlichen Produktionszeitbedarfs und des zusätzlich benötigten Bauraums derartige Verfahren meist sehr teuer.

Um gattungsgemäße Verfahren preiswerter gestalten zu können ist es aus dem Stand der Technik bekannt, das auf die Mündung eines Behälters aufgelegte Siegelelement durch ein Anzugsmoment eines Schraubdeckel(-verschlusses) zu fixieren und nachfolgend durch, dann in der Regel auf den gesamten Behälter wirkende, Temperierung zu schmelzen. Dabei wird dann ausgenutzt, dass das Siegelelement in aller Regel dünnere Wandstärken als der zugehörige Behälter oder der zugehörige Schraubdeckel aufweist. Auch bestehen die Siegelelemente häufig aus Laminaten, die dünne Metallfolien umfassen. Die Metallfolien - im Allgemeinen Aluminiumfolien - bieten hervorragende Barriereeigenschaften, die dann von besonderer Bedeutung sind, wenn das Füllgut besonders sicher gegen äußere Einflüsse geschützt sein soll, beispielsweise, wenn das Füllgut aseptisch-also unter sterilen Bedingungen - abgefüllt wurde. Die hier beschriebenen Siegelverfahren nutzen dann beispielsweise auch die Wärmeleitfähigkeit dieser Laminatschichten aus, um den auf die zur Ausbildung der Siegelung aufzuschmelzenden Laminatschicht wirksam werdenden Anteil der auf den Behälter von außen einwirkende Wärmeenergie möglichst groß zu gestalten.

Trotz Ausreizung der beiden eben beschriebenen physikalischen Effekte, der rascheren Durchwärmung dünnerer Wandbereiche und der Konzentration der Wärmeenergie durch benachbarte Laminatschichten, die aus höchwärmeleitfähigen Materialien, insbesondere Metall, ganz insbesondere Aluminium gebildet sind, bleibt der thermische Nutzungsgrad bei derartigen Verrichtungen und Verfahren äußerst gering und häufig nur im einstelligen oder niedrigen zweistelligen prozentualen Bereich.

Zudem ergeben sich häufig Ungenügsamkeiten in der Qualität der Siegelung. Da der wirksame Wärmeenergieanteil klein bleibt, ist das Verarbeitungsfenster meist beschränkt, sodass die einzelnen Toleranzen der am Versiegelungsprozess teilhabenden Parameter, wie beispielsweise Energieabgabe der Wärmequelle, der Position des Behälters zur Wärmequelle, der wirksame Verkettung der vorliegenden Umgebungstemperatur, der vorherrschenden Luftfeuchtigkeit, der Luftbewegung, der tatsächlichen Wandstärke der zu versiegelnden Behältermündung, deren tatsächliche Materialzusammensetzung, deren tatsächliche Farbnuance, die tatsächliche Wandstärke des Siegelelements, deren Ebenheit und ggf. Aufteilung ihrer Laminatschichten, deren Farbgebung und Materialzusammensetzung, das wirksame Anzugsdrehmoment, möglicherweise vorhandene Grate oder Unebenheiten am Gewinde und vielen weiteren Einflussfaktoren, sich in unterschiedlichen Konstellationen derart zueinander ausbilden können, dass die Qualität der Siegelung als unzureichend bewertet werden muss.

Da es bereits bekannt ist, dass sich weitere Probleme dadurch ergeben, dass es bei der mit der Herstellung der Versiegelung einhergehenden, arealweisen Verschmelzung wenigstens eines Siegelpartners, insbesondere wenigstens des Siegelelements oder wenigstens eines Bereichs des Siegelelements und der Mündung des Behälters oder wenigstens eines Bereichs der Mündung des Behälters zu Volumenänderungen kommt unter deren Folge das auf das Siegelelement zur Ausbildung der Siegelnaht anliegende Drehmoment negativ und fallweise bis hin zum völligen Zusammenbruch beeinflusst werden kann, ist man nach Stand der Technik in vielen Bereichen dazu übergegangen, dass auf den Schraubdeckel wirkende Drehmoment zu überhöhen.

Entsprechende Verfahren und Vorrichtungen sind dazu beispielsweise aus der US 2,937,481 A, der EP 1 103 513 81 oder der EP 0524 196 81 bekannt und werden heute in der Industrie häufig noch entsprechend angewendet.

Von Nachteil ist dabei, dass die Grundsätzlichkeit der Problematik, dass einer sich chaotisch ergänzenden Kette von nur in Bereichen erfassbaren Ungewissheiten mit einem jeweiligen, durch festgelegte Prozesswerte definierten Verfahren begegnet werden soll.

Zudem ist von Nachteil, dass die die Problematik der Energieverschwendung gegenüber dem zuvor beschriebenen Prozess abermals erhöht wird. Denn nicht nur zur Erzeugung des höheren Drehmoments wird mehr Energie benötigt, auch die Gewinde von Schraubdeckel und Behälter müssen stärker, also unter Ausbildung größerer Wandstärken, vorgesehen werden, was wiederum den Energiebedarf zur Durchwärmung erhöht und so Weiter.

Alternativ oder ergänzend ist es aus dem Stand der Technik bekannt, ein zwischen Schraubdeckel und Siegelelement angeordnetes, zusätzliches. Stützstrukturelement vorzusehen, um insbesondere einen Zusammenbruch des zur Ausbildung der Siegelung notwendigen Anliegens eines auf die Verbindung zwischen Sehraubdeckel und Behältergewinde wirksamen Drehmoments zu unterbinden.

Obwohl das Vorsehen solcher Stützstrukturelemerite in vielen Fällen hilfreich ist und in vielen Füllprozessen die Anzahl der den Qualitätsanforderungen gerecht werdenden Siegelungen erhöht, bleibt festzuhalten, dass das Vorsehen derartiger Stützstrukturelemente grundsätzlich die Anzahl der toleranzbehafteten Prozesspartner, beispielsweise wegen Stärke-, Struktur- und Materialtoleranzen, erhöht. Zudem wird abermals die Energiebilanz des Füllprozesses verschlechtert und nicht zuletzt wird der Prozess auch verteuert, zumal das zusätzliche Element nicht nur hergestellt, sondern auch in den Prozess integriert werden muss. Aus letztem Grund ist es zudem bekannt, dass ein solches Stützstrukturetement unmittelbar mit dem, beispielsweise durch ein Laminat gebildetes, Siegelelement verbunden ist oder gar einen Teil des Laminats des Siegelelements bildet.

Vor diesem Hintergrund liegt der vorliegenden Erfindung die Aufgabe zugrunde ein Verfahren und eine Vorrichtung bereit zu stellen, die zur wenigstens teilweisen Entschärfung des beschriebenen Energie- und/oder Materialverbrauchs beitragen und vorteilhafterweise mit besonders hoher Prozesssicherheit den jeweiligen Qualitätsanforderungen wenigstens genügende, insbesondere qualitativ besonders hochwertige, Siegelungen an Behältern mit Schraubkappenverbindung bereitzustellen.

Auch kann es eine weitere Aufgabe der Erfindung sein, den Füllprozess zu vereinfachen und zu beschleunigen und wenigstens eine Alternative zur Bereitstellung besonders kompakt bauender Vorrichtungen Vorrichtung zum Anbringen eines Siegelelementes und eines, ein Muttergewinde aufweisenden, Schraubdeckels an eine Mündung eines Behälters bereit zu stellen.

Wenigstens eine Aufgabe der Erfindung wird bei einem Verfahren zum Anbringen eines Siegelelementes und eines, ein Muttergewinde aufweisenden, Schraubdeckels an eine Mündung eines Behälters,wobei die Mündung des Behälters eine Mündungswand, umfasst deren Außenseite wenigstens bereiehsweise ein Schraubengewinde aufweist und die Mündung wenigstens durch bereichsweises Schmelzen des Siegelelements aufbrechbar versiegelt und durch das Anbringen des Schraubdeckels öffenbar verschlossen wird, umfassend folgende Schritte:
a) Bereitstellen einer Vorrichtung zum Versiegeln und Verschließen von Behältern
b) Bereitstellung eines Schraubdeckels
c) Bereitstellen eines Siegelelements
d) temporäre Einlagerung wenigstens des Schraubdeckels in eine Schraubdeckelaufnahme einer Behälterverschließeinrichtung
e) Auflage des Siegelelerhents auf die Mündung des Behälters
f) Versiegeln der Mündung des Behälters wenigstens durch bereichsweises Schmelzen des Siegelelements, unter Inanspruchnahme eines ersten Zeitintervalls
g) Positionieren eines Anfangsbereichs des Muttergewindes zu einem Anfangsbereich des Schraubgewindes
h) Verschließen der Mündung des Behälters durch Aufschrauben des Schraubdeckels unter Inanspruchnahme eines zweiten Zeitintervalls
dadurch gelöst, dass das zweite Zeitintervall wenigstens einen Anteil des ersten Zeitintervalls überdeckt.

Die Benennung der einzelnen Verfahrensschritte steht dabei zunächst nicht zwangsweise in Zusammenhang mit der chronologischen Abfolge der einzelnen Verfahrensschritte.

Für bevorzugte Ausführungsformen werden im weiteren Verlauf der Beschreibung jedoch an verschiedenen Stellen bevorzugte chronologische Folgen wenigstens einzelner Verfahrensschritte festgelegt.

Der Begriff "Schmelzen" umfasst im Sinne der vorliegenden Schrift zunächst auch das "Anschmelzen" sowie das "Aufschmelzen" und ist im Besonderen hier so zu verstehen, dass ein Randbereich des Siegelelements In einen zähflüssigen Zustand gebracht wird, von dem ausgehend es sich bei Wiederannahme eines festen Aggregatzustandes mit einem Randbereich eines benachbarten, insbesondere aus einem Thermoplast bestehenden, Bauteils, insbesondere also der Mündung, oder mit anderen Worten insbesondere der die Mündung ausbildenden Behälterwandabschnitte, des Behälters eine wenigstens teilweise stoffschlüssige Verbindung eingehen kann und vorzugsweise eingeht. Durch das Schmelzen findet also eine thermisch hervorgerufene Plastifizierung wenigstens von (Rand-)bereichen des Siegelelements statt..

Demnach ist es bevorzugt, dass wenigstens das Siegelelement aus einem Thermoplast gebildet ist. Weiter ist äber auch bevorzugt, dass wenigstens der die Mündung ausbildende Bereich des Behälters aus einem Thermoplast ausgebildet ist. Da ferner weiter bevorzugt ist, dass der Behälter an sich einstückig ausgebildet ist, ist es besonders bevorzugt, dass der Behälter oder wenigstens der wesentliche Anteil des Behälters, bspw. also wenigstens 90% Volumenanteil der den Behälter bildenden Wendbereiche, aus einem Thermoplast ausgebildet sind.

Unter einer "aufbrechbaren" Versiegelung des Siegelelements ist zunächst jegliche mechanisch Indikation einer Erstöffnung zu verstehen, unabhängig davon, ob die Versiegelung tatsächlich zur Indikation einer erfolgten Erstöffnung aufgebrochen, aufgerissen, durchstochen oder ähnliches wird. Ausschlaggebend ist, dass ein Benutzer oder ein nachfolgender Bearbeitungsprozess bei intakter Siegelung des Siegelelements davon ausgehen kann, dass der Behälter nach erfolgter Versiegelung nicht geöffnet wurde und durch Wahrnehmung einer "gebrochenen" Siegelung des Siegelelements von bereits erfolgter Öffnung des Behälters ausgehen kann. Dabei ist es selbstverständlich unerheblich, ob die Siegelnaht des Siegelelements oder das Siegelelement, beziehungsweise wenigstens ein Areal des Siegelelements "gebrochen" ist. Eine Öffnung liegt demzufolge vor, wenn der Inhalt des Behälters gegenüber äußeren Einflüssen nicht mehr in der gleichen Weise wie bei Vorliegen einer intakten Siegelung geschützt ist.

Dadurch, dass das zweite Zeitintervall wenigstens einen Anteil des ersten Zeitintervalls überdeckt, ergibt sich der Vorteil, dass eine zwischenzeitliche Abkühlung der zu verschmelzenden Partner verhindert wird, wobei eine unnötige Zeitspanne zur Aufrechterhaltung eines zur Schmelzung genügenden Temperaturbereichs vermieden wird. Demnach ist also eine Überhitzung der zu schmelzenden Bauteile beziehungsweise der zu verschmelzenden Partner in praktisch relevantem Sinn kaum oder gar nicht mehr notwendig. Da die Bauteile demzufolge auch maximal einer kaum messbaren oder gar keiner Überhitzung mehr ausgesetzt werden, müssen sie auch nicht dafür ausgelegt sein, sodass bereits bei ihrer eigentlichen Auslegung Material und Energieaufwand eingespart werden kann. Entsprechend ist der Durchwärmungsprozess schneller durchführbar.

Da sowohl die eigentliche Durchwärmung rascher erfolgen kann, Zeit zur übermäßigen Durchwärmung und für de sonst üblichen Temperaturhaltezeiten eingespart werden kann, erlaubt es das vorliegende Verfahren, Behälter rascher und damit effizienter und kostengünstiger zu verschließen.

Auch der Abkühlungsprozess, der im vorliegenden Verfahren erst nach Beginn des zweiten Zeitintervalls anfangen kann, kann unkomplizierter und schneller ablaufen, beziehungsweise durchgeführt oder begleitet werden.

Insgesamt wird auch die Vorrichtung zum Anbringen eines Siegelelementes und eines, ein Muttergewinde ausweisenden, Schraubdeckels an eine Mündung eines Behälters weniger belastet, was weniger Ausfälle und eine höhere Lebensdauer zur Folge hat. Dies erhöht wiederum die Wirtschaftlichkeit des vorliegenden Verfahrens,

Dadurch, dass das zweite Zeitintervall wenigstens einen Anteil des ersten Zeitintervalls überdeckt wird zusätzlich erreicht, dass die die Güte der Siegelqualität bestimmenden Parameter sehr viel definierter im Prozess zu fassen und zu steuern, gegebenenfalls auch zu regeln, sind als bei bekannten Verfahren. Auf diese Weise werden besonders zuverlässig besonders hochwertige Siegelungen erzielt.

Der Anwender des Verfahrens beziehungsweise der Betreiber der Vorrichtung hat demnach mit besonders wenigen Reklamationen,zu rechnen. Dies ist ganz besonders wichtig, da es beispielsweise in der Lebensmittelindustrie oder auch im Bereich des Handels mit medizinischen Gütern, meist Praxis ist, meist wenigstens die gesamte Palette abgefüllter Behälter, zu entsorgen, wenn ein darauf enthaltener einzelner Behälter nicht ordnungsgemäß versiegelt war. Dies bedeutet dann meist einen hohen wirtschaftlichen Schaden, den im Allgemeinen der abfüllende Betrieb zu tragen hat. In einigen Fällen kann ein solcher Schaden auch auf den Hersteller der Vorrichtung fallen.

Davon abgesehen ist sämtlicher, zur Herstellung der zu entsorgenden Behälter und ihres Inhalts getriebene Aufwand, umsonst betrieben worden und schadet entsprechend, beispielsweise einer Gesamtenergiebetrachtung, erheblich. Derartige Schäden können jedoch durch Anwendung des vorliegenden Verfahrens vermieden oder wenigstens in erheblichem Maß reduziert werden.

Es ist von Vorteil, wenn das zweite Zeitintervall wenigstens 75%, bevorzugt wenigstens 90% des ersten Zeitintervalls überdeckt, ganz besonders bevorzugt das erste Zeitintervall vollständig überdeckt.

Auf diese Weise kann das Verfahren zum Anbringen eines Siegelelementes und eines, ein Muttergewinde aufweisenden, Schraubdeckels an eine Mündung eines Behälters besonders effizient durchgeführt werden.

Überraschend ist, dass einige Nebeneffekte erst ab einer Überdeckung von mindestens 75% zu beobachten sind. So kann keinesfalls von einer einfachen linearen Verbesserung bei entsprechend erhöhtem Überdeckungsanteils gesprochen werden, da in Versuchen bei Erhöhung des Überdeckungsanteils etwa von 15% bis auf über 50%, bspw. 55% wenigstens bei Schraubkappen mit maximal 6 Gewindeumdrehungen, insbesondere maximal 4 Gewindeumdrehungen, eines, ein Muttergewinde aufweisenden, Schraubdeckel an eine Mündung eines Behälters, kaum messbare Verbesserungen festzustellen waren, während ein Überdeckungsanteil von mindestens 75% plötzlich deutliche Vorteile mit sich zu bringen scheint.

Obwohl sogar ungewollte Verschmelzungen in den sich berührenden Gewinden zwischen Schraubdeckel und Behältermündung zu befürchten wären, hat sich ebenso überraschend herausgestellt, dass eine Überdeckung von wenigstens 90% zu besonders hochwertigen Siegelungen führt.

Bevorzugt ist das zweite Zeitintervall durch Anliegen eines, auf die Schraubdeckelaufnahme wirkenden, Drehmoments charakterisiert.

Auf diese Weise kann das Verfahren besonders energiesparend durchgeführt werden. Da die Schraubdeckelaufnahme in unmittelbarem Kontakt zu dem mit der Mündung des Behälters zü verschraubenden Schraubdeckel (der Schraubkappe) steht wirkt auch die durch das einwirkende Drehmoment aufgebrachte Energie unmittelbar.

Zwar ist es alternativ beispielsweise denkbar, ein gegenüber der Schraubdeckelaufnahme zur temporären Behälteraufnahme Vorgesehenes Areal drehbar zu gestalten und den Behälter gemeinsam mit diesem drehbaren Areal gegenüber einer, dann beispielsweise feststehenden oder gegenläufig drehenden, Schraubdeckelaufnahme mit einem darauf wirkende Drehmoment zu beaufschlagen. Dies birgt jedoch eine erhöhte Gefahr von ungewollten Verlusten eines Behälterinhalts und begrenzt bereits aus diesem Gesichtspunkt heraus die erreichbare Geschwindigkeit bei Durchführung des Verfahrens. Zudem sind die zu bewegenden Massen sehr viel größer, da letztlich auch der Behälterinhalt mitbewegt werden muss.

Somit trägt eine Charakterisierung des zweiten Zeitintervalls durch Anliegen eines, auf die Schraubdeckelaufhahme wirkenden, Drehmoments zur Energieersparnis, Prozessbeschleunigung und zur Erreichung einer hohen Prozesssicherheit bei.

Zudem kann das Anliegen eines Drehmoments als Indikator für die Steuerung anderer Prozessabläufe genutzt werden.

Von besonderem Vorteil ist es, wenn die Schraubdeckelaufnahme während der Durchführung des Schrittes h) chronologisch aufeinanderfolgend ein erstes Drehzahlniveau, ein zweites Drehzahlniveau, ein drittes Drehzahlniveau und ein viertes Drehzahlniveau erreicht, wobei das erste Drehzahlniveau größer ist als das dritte Drehzahlniveau, wobei das dritte Drehzahlniveau größer ist als das zweite Drehzahlniveau und das vierte Drehzahlniveau, wobei das zweite Drehzahlniveau größer oder gleichgroß zum vierten Drehzahlniveau ist.

Unter Verwendung dieser vorteilhaften Ausgestaltung des vorliegenden Verfahrens können besonders hochwertige Ergebnisse beim Anbringen eines Siegelelementes und eines, ein Muttergewinde aufweisenden, Schraubdeckels an eine Mündung eines Behälters erzielt werden, wenn die Mündung des Behälters eine Mündungswand umfasst deren Außenseite wenigstens bereichsweise ein Schraubengewinde aufweist und die Mündung wenigstens durch bereichsweises Schmelzen des Siegelelements aufbrechbar versiegelt und durch das Anbringen des Schraubdeckels öffenbar verschlossen wird.

In diesem Zusammenhang kann es fallweise besonders bevorzugt, dass das zweite Drehzahlniveau und das vierte Drehzahlniveau wenigstens temporär bevorzugt einen Wert von Null oder annähernd gleich Null annehmen.

Auf diese Weise nimmt das aus dem sich im Verbindungsprozess befindlichen Behälter, dem Siegelelement und dem Schraubdeckel gebildete System selbstregelnd seine notwendigen Reifezeiten ein. Da sich die selbstregelnden Reifezeiten (Drehzahlniveau gleich oder annähernd gleich Null) unter den im vorliegenden Verfahren gebildeten Umgebungsbedingungen praktisch automatisch auf "Minimalzeiten" beschränken, wird so auch weiter zu der gewünschten Energie- und Zeitoptimierung beigetragen.

Von besonderem Vorteil ist es dabei, wenn das dritte Drehzahlniveau in abhängigem Wirkzusammenhang mit der Durchführung des Schrittes f) steht.

Dies trägt zur Selbstregelung des Systems bei und gewährleistet eine besondere Zuverlässigkeit bei Erreichung der gewünschten, besonders hochwertigen Versiegelung und trägt damit entscheidend zu dem gewünschten Schutz eines Behälterinhalts bei.

Weiter ist es von besonderem Vorteil, wenn in abhängigem Wirkzusammenhang mit der Durchführung des Schrittes f) und einer dabei wenigstens an dem Siegelelement erzeugten Formänderungsarbeit, eine Drehwinkeländerung der Schraubkappe veranlasst wird, die vorzugsweise in einem Schritt i) durch eine dazu vorgesehene Detektoreinheit detektiert wird.

Auf diese Weise läßt sich besonders einfach eine sehr aussagekräftige Qualitätskontrolle durchführen. Da die Qualitätskontrolle bereits während der Ausführung des Verschlussprozesses durchgeführt wird, ist die hier vorgeschlagene Ausgestaltung zudem geeignet, korrigierend in den Prozess einzugreifen oder wenigstens eine Korrektur zu initiieren.

Dabei ist es besonders bevorzugt, dass im Verfahrensschritt d) eine Drehwinkeländerung zwischen 0,1° und 20°, bevorzugt zwischen 1° und 10°, ganz bevorzugt zwischen 2° und 7° erzeugt wird, da dies einerseits eine zuverlässige Qualitätskontrolle zu lässt und andererseits unter den zuvor beschriebenen Gesichtspunkten den erheblichen Energieeinsparungspotentialen des vorliegenden Verfahrens nicht unnötig stark entgegenwirkt.

In diesem Zusammenhang ist es somit besonders bevorzugt, wenn die detektierte. Drehwinkeländerung in einem Schritt j) in einer dazu vorgesehenen Steuer- und/oder Regeleinheit mit einem Sollwert verglichen wird und vorzugsweise die aus dem Vergleich gewonnenen Erkenntnisse im Zusammenhang der Qualitätsüberwachung und/oder zur Steuerung oder Regelung der vorliegenden und/oder nachfolgender Anbringungsvorgänge genutzt werden.

Dadurch kann die Qualität des Ergebnisses des Verfahrens ständig verbessert und/oder kontrolliert werden. Ein Anbringungsvorgang umfasst dabei, unter Voraussetzung der unter den Schritten a) bis c) erfolgten Bereitstellungen zumindest die Verfahrensschritte d) bis h).

Weiterhin ist es zur Ausgestaltung des vorliegenden Verfahrens bevorzugt, wenn das zweite Zeitintervall wenigstens ein erstes Teilintervall und ein zweites Teilintervall umfasst, wobei das erste Teilintervall frei von einer Überdeckung des zweiten Zeitintervalls ist und das zweite Teilintervall durch das Vorliegen der Überdeckung des zweiten Zeitintervalls charakterisiert ist und wobei das, das zweite Zeitiritervall charakterisierende Drehmoment im zweiten Teilintervall einen gemittelten Zweitwert annimmt, der von einem, im ersten Teilintervall angenommenen, gemittelten Erstwert, um maximal 20%, vorzugsweise um maximal 10%, ganz vorzugsweise um weniger als 5% abweicht.

Mit anderen Worten ist das Verfahren also frei von einer aufwendigen Drehmomenten-Regelung. Dadurch wird zum einen also eine wichtige Voraussetzung für eine ganz besonders energieeffiziente, materialschonende und dennoch hochwertige Versiegelung bereitgestellt. Zum anderen kann auch der Aufwand der Gestaltung der Regeleinheit des das Drehmoment zur Verfügung stellenden Antriebs gering gehalten werden, wodurch einerseits die Zuverlässigkeit der Wiederhohlgenauigkeit und andererseits auch die Lebensdauer des Antriebs und seiner Steuer- und/oder Regelungseinheit steigt.

Es ist demnach sogar ganz besonders bevorzugt, während des ersten Teilintervalls und des zweiten Teilintervalls steuerungs- öder regelungstechnisch einen gleichen Drehmomentwert anstehen zu lassen. Die Drehwinkeländerung wird also nicht dadurch erzeugt, dass das auf den Schraubdeckel wirkende Drehmoment variiert, insbesondere erhöht wird, sondern stellt sich selbständig durch die in den zu verbindenden Partnern durch den Verschließ- und Siegelvorgang hervorgerufenen Änderungsärbeiten ein. Demnach ist das Verfahren frei von einem zu definierenden, einzustellenden oder einzuprogrammierenden Eingriff in einen, im Detail betrachtet letztlich hinsichtlich beispielsweise seiner Gewichtung, kaum zu kalkulierbaren Prozess. Die Prozesssteuerung wird durch Operation mit einem praktisch, wenigstens in den oben genannten Grenzen, konstanten Drehmoment einerseits vereinfacht und trägt andererseits zur deutlichen Erhöhung der Qualität der erzeugten Versiegelung bei.

Es ist von großem Vorteil, wenn das erste Teilintervall nach Abschluss des Schrittes g) bis zum Abschluss des Schrittes h) dauert.

Auf diese Weise wird der Positionierungsprozess besonders "sauber" von dem eigentlichen Schließ- und Siegelprozess getrennt. Durch die Trennung der beiden Prozesse ist ein "sauberer" Positionierungsprozess rasch und ohne Probleme durchführbar. Dabei wurde erkannt, dass das Einbringen von zur Siegelung genutzter Energie, wie es beispielsweise durch das dauerhafte. Anliegen thermischer Energie in Siegelöfen nach bisherigem Stand der Technik, einer sauberen Positionierung der zu verbindenden Partner, also des, das Siegelelement enthaltenen, Schraubdeckels und der Mündung des Behälters häufig entgegensteht. Dabei wird zu einem nicht zu unterschätzenden Anteil im ein- bis zweistelligen Promillebereich bereits durch unsauberes Positionieren der zu verbindenden Partner eine qualitativ hochwertige Versiegelung des Behälters verhindert wird.

Es ist bevorzugt, dass der Schritt f) unter Zuhilfenahme einer Hochfrequenzsiegeleinrichtung durchgeführt wird.

Eine derartige Fortbildung der Erfindung ermöglicht eine hohe Defihierbarkfeit der zeitlichen Einwirkung des zur Siegelung notwendigen Energieeintrages und in Folge dessen unter den hier genannten Umständen einen insgesamt mit hohem Schärfegrad zu definierenden Prozess. Ein klar definierter Prozess ist mit hoher Wiederhohlgenauigkeit durchführbar und kann zufällige Fehler weitgehend ausschließen. Demzufolge sind qualitativ hochwertige Siegelungen prozesssicher erzeugbar.

Dabei ist es bevorzugt, dass die Hochfrequenzsiegeleinrichtung mit einer Frequenz arbeitet, die zwischen 25 kHz und 2500 kHz, bevorzugt zwischen 150 kHz und 400 kHz, ganz bevorzugt zwischen 230 kHz und 320 kHz angesiedelt ist.

Diese Werte haben in Versuchen überraschenderweise besonders gute Ergebnisse erzielt.

Besonders vorteilhaft ist es, wenn Schritt g) vor Schritt e) vorgenommen wird.

Dies verhindert unter Anderem ungewollte Verlagerungen des Siegelelementes und trägt abermals zur klaren und geordneten Struktur des Verfahrensablaufs bei.

Dazu ist es vorteilhaft, wenn das Siegelelement bereits vor Schritt g) im Inneren des Schraubdeckels fixiert wird. Insbesondere ist es dabei vorteilhaft, wenn das Siegelelement dabei so im Schraubdeckel fixiert ist, dass es Kontakt zum inneren Boden des Schraubdeckels hat. Dadurch wird bei jedem Verschraubungsvorgang das jeweilige im jeweiligen Schraubdeckel befindliche Siegelelement stets unmittelbar bei Kontakt mit der Mündung des Behälters mit einer entsprechenden Klemmkraft beaufschlagt und undefinierte Schubbewegungen des Siegelelements im inneren des Schraubdeckels werden vermieden. Zudem ist es auf diese Weise besonders gut umsetzbar, dass der zur Durchführung des Siegelvorgangs notwendige Energieeintrag besonders zielgerichtet eingestellt und/oder ausgeführt werden kann.

Es ist unter anderem auch deshalb bevorzugt, dass Schritt b) und Schritt c) zeitgleich durchgeführt werden und dazu vorzugsweise das Siegelelement zuvor in einen Bodenbereich des Schraubdeckels eingebracht und dort besonders vorzugsweise wenigstens temporär fixiert worden ist.

Zudem trägt diese vorteilhafte Ausgestaltung auch der Erreichung einer hohen Prozessgeschwindigkeit bei der Durchführung des Verfahrens bei.

Von ganz besonderem Vorteil ist es, wenn in Schritt a) eine Vorrichtung gemäß einem der Ansprüche 14 bis 27 bereitgestellt wird.

Eine Vorrichtung gemäß Anspruch 14 ist, insbesondere wenn sie zudem nach einem der Ansprüche 15 bis 27 ausgestaltet ist, besonders vorteilhaft zur Durchführung des beschrieben Verfahrens einsetzbar. Das beschriebene Verfahren kann unter Einsatz einer derartigen Vorrichtung besonders einfach, vorteilhaft und prozesssicher durchgeführt werden.

So wird bei einer Vorrichtung zum Anbringen eines Siegelelements und eines, ein Muttergewinde aufweisenden, Schraubdeckels an eine Mündung eines Behälters, wobei die Vorrichtung eine Behälterverschließeinrichtung umfasst; die eine Schraubdeckelaufnahme aufweist, wobei die Schraubdeckelaufnahme einen Aufnahmeraum zur temporären Einlagerung wenigstens des Schraubdeckels ausbildet, wobei die Vorrichtung ferner eine, einen Wirkbereich aufweisende Schmelzeinheit zur wenigstens bereichsweisen Schmelzung des Siegelelements aufweist, wenigstens eine, der der Erfindung zu Grunde liegenden Aufgaben dadurch gelöst, dass der Wirkbereich der Schmelzeinheit wenigstens anteilig innerhalb des Aufnahmeraums ausgebildet ist.

Die dadurch erzielbaren Vorteile kann der Fachmann in weiten Teilen einfach sinngemäß dem beschriebenen Verfahren entnehmen, sodass auf wenigstens sinngemäß wiedrhoiende Textpassagen hier aus ökonomischen Gründen verzichtet wird. Ebenso kann der Fachmann die Beschreibung der vorteilhaften Ausgestaltungen des Verfahrens sinngemäß auf die entsprechenden Ausgestaltungen der Vorrichtung übertragen.

Dadurch, dass der Wirkbereich der Schmelzeinheit wenigstens anteilig innerhalb des Aufnahmeraums ausgebildet ist, sind hervorragende Voraussetzungen geschaffen, das Versiegeln einer Mündung eines Behälters wenigstens durch bereichsweises Schmelzen eines Siegelelements unter Inanspruchnahme eines ersten Zeitintervalls und das Verschließen der Mündung des Behälters durch Aufschrauben eines Schraubdeckels unter Inanspruchnahme eines zweiten Zeitintervalls derart vorzunehmen, dass das zweite Zeitintervall wenigstens einen Anteil des ersten Zeitintervalls überdeckt.

Dadurch, dass der Wirkbereich der Schmelzeinheit wenigstens anteilig innerhalb des Aufnahmeraums ausgebildet ist, können die im Verfahren einem innerer Prozess zugeordneten Schritte vorrichtungsgemäß entsprechend abgebildet werden.

Der zur Versiegelung notwendige Energieeintrag ist somit also erstmals wirklich zielgerichtet vornehmbar. Zudem ist der Energieeintrag ortsnah vornehmbar. Somit sind Verluste in äußerst geringen Grenzen haltbar und vor allem sehr definiert kalkulierbar.

Insgesamt sind damit hervorragende Voraussetzungen zur ökonomischen und ökologischen Durchführung eines Verfahrens zum Anbringen eines Siegelelementes und eines, ein Muttergewinde aufweisenden, Schraubdeckels an eine Mündung eines Behälters bereitgestellt.

Zudem ist eine derartige Vorrichtung auch sehr gut geeignet, um nach aseptischen Gesichtspunkten und/oder Vorschriften gestaltet beziehungsweise ausgestaltet zu werden.

Dazu kann es besonders bevorzugt sein, dass wenigstens 30%, vorzugsweise wenigstens 50%, ganz vorzugsweise wenigstens 66% des Wirkbereichs der Schmelzeinheit innerhalb des Aufnahmebereichs ausgebildet ist.

Neben den dadurch erzielbaren Vorteilen für eine aseptische Ausgestaltung ergeben sich hieraus auch deutliche Vorteile hinsichtlich des erzielbaren Wirkungsgrades beim Energieeintrag. Überraschend ist dabei, dass bei einem Anteil von wenigstens 66% des Wirkbereichs der Schmelzeinheit innerhalb des Aufnahmebereichs besonders sicher Indifferenzphasen bei höher oder hochfrequentem Betrieb sicher vermeidbar sind.

In diesem Zusammenhang ist es deshalb ganz besonders bevorzugt, dass wenigstens Teile der Schmelzeinheit,wenigstens anteilig, Insbesondere zu wenigstens 80%, vorzugsweise zu wenigstens 90%, ganz vorzugsweise zu wenigstens 97% innerhalb des Aufnahmebereichs oder innerhalb eines durch eine projezierten Grundfläche des Aufnahmebereichs chrakterisierten Nachbarbereich ausgebildet sind.

Wenn die Schmelzeinheit eine Hochfrequenzsiegeleinrichtung aufweist, ist der Energieeintrag besonders zielgerichtet und zeitlich besonders gut definiert vornehmbar.

Zudem ist eine Hochfrequenzsiegeleinrichtung sehr robust und zuverlässig ausführbar. Weitere wichtige Vorteile des Vorsehens einer Hochfrequenzsiegeleinrichtung sind der Verfahrensbeschreibung bereits entnehmbar.

Weiter ist es von Vorteil, wenn die Hochfrequenzsiegeleinrichtung wenigstens ein Netzteil und einen Schwingkreis mit einem Induktor aufweist.

So gestaltete Hochfrequenzsiegeleinrichtungen sind besonders zuverlässig und robust gestaltbar und zudem verhältnismäßig preiswert herstellbar. Ein weiterer wichtiger Vorteil eines derartigen Aufbaus besteht darin, dass die genannten Bauelemente räumlich voneinander getrennt in der Vorrichtung vorgesehen werden können, sodass sich abermals besöndere Vorteile zur Beachtung möglicher notwendiger Hygienevorschriften ergeben ("aseptische Gestaltung"). Weiter muss beim Vorsehen bewegter Teile, wie beispielsweise der Schraubdeckelaufnahme, nicht das Gewicht aller genannten Bauelemente, also dem Netzteil, dem Schwingkreis und dem Induktor mitbewegt werden.

Vielmehr ist es im Zusammenhang mit den zuvor beschriebenen Merkmalen ganz besonders bevorzugt, dass der Induktor der Schmelzeinheit wenigstens anteilig, insbesondere zu wenigstens 80%, vorzugsweise zu wenigstens 90%, ganz vorzugsweise zu wenigstens 97% innerhalb des Aufnahmebereichs oder innerhalb eines durch eine projezierten Grundfläche des Aufnahmebereichs chrakterisierten Nachbarbereich ausgebildet ist.

Dies kann die erzielbare Taktzeit der Vorrichtung erhöhen und ihren Energiebedarf senken.

In einigen Fällen kann es von großem Vorteil sein, wenn der Aufnahmebereich um eine Rotationsachse drehbar angeordnet ist und wenigstens ein Teil des Induktors um dieselbe Rotationsachse drehbar angeordnet ist.

Auf diese Weise ist das Aufschrauben des Schraubdeckels auf die Mündung des Behälters unter einem recht geringem Energiebedarf möglich, da für die notwendige Relativbewegung zwischen Schraubdeckel und Behälter bzw. der Mündung des Behälters nur geringe Mässën bewegt werden müssen.

Zudem kann die Energieeinspeisung in den Induktor relativ komfortabel, unanfällig und kostengünstig gelöst werden.

In anderen Fällen kann es dagegen von großem Vorteil sein, wenn der Aufnahmebereich um eine Rotationsachse drehbar angeordnet ist und der Induktor starr gegen über dieser Rotationsachse angeordnet ist.

Auch auf diese Weise ist das Aufschrauben des Schraubdeckels auf die Mündung des Behälters unter einem recht geringem Energiebedarf möglich, da für die notwendige Relativbewegung zwischen Schraubdeckel und Behälter bzw. der Mündung des Behälters nur geringe Massen bewegt werden müssen.

Zwar ist dann die Gestaltung der Energieeinspeisung in den Induktor aufwendiger, es bietet sich dann aber der Vorteil, dass Peripheriegeräte, wie beispielsweise eine Kühleinrichtung, einfacher mit dem Induktor in Wirkverbindung bringbar sind.

In jedem Fall kann es ferner bevorzugt sein, dass die Hochfrequenzsiegeleinrichtung eine Primärspule und eine Sekundärspule aufweist.

Dies ermöglicht eine sichere und kontaktlose Energieübertragung und erleichtert damit unter anderem die Einhaltung geltender Richtlinien zur aseptischen Gestaltung erheblich.

Ebenso kann es bevorzugt sein, dass die Hochfrequenzsiegeleinrichtung einen Rotor und einen Strator aufweist.

Auch auf diese Weise ist eine sichere und kontaktlose Energieübertragung möglich, sodass auch auf diese Weise die Einhaltung geltender Richtlinien zur aseptischen Gestaltung verhältnismäßig unkompliziert umsetzbar ist.

Auch ist es von Vorteil, wenn die Hochfrequenzsiegeleinrichtung wenigstens einen Feldkonzentrator umfasst.

Durch Vorsehen eines Feldkonzentrators ist die Erreichung eines besonders hohen Wirkungsgrades erzielbar. Dazu ist wenigstens ein Wirkabschnitt des Induktors von einem Konzentrator umgeben ist. Vorzugsweise sind alle Wirkabschnitte des Induktors von Konzentratoren umgeben. Bevorzugt ist der Wirkabschnitt nur teilweise von dem Konzentrator umgeben und vorzugsweise zum Innenraum des Aufnahmebereichs hin, wenigstens teilweise, offen. Unter einem Konzentrator wird in diesem Zusammenhang ein Mittel zur Konzentration des Magnetfeldes verstanden. Mit Vorteil ist der Konzentratorn dabei aus einem magneto-dielektrischen Material hergestellt, also aus einem Material, das sowohl ferromagnetische als auch dielektrische Eigenschaften aufweist. Hierbei kann es sich beispielsweise um einen thermoplastischen Kunststoff handeln, in den gleichmäßig Weicheisenpartikel eingebettet sind. Dabei kann es wichtig sein, dass der thermoplastische Kunststoff selber möglichst einen höheren Schmelzpunkt aufweisen sollte, als der oder die thermoplastischen Kunststoffsorten, die zur Bildung der zu verbindenden Siegelpartner Anwendung finden, auch wenn der Konzentrator dem Wirkfeld des Induktors nur zu einem geringeren Teil ausgesetzt ist. Der Einsatz von Konzentratoren hat den Vorteil, dass das Magnetfeld gezielt auf den gewünschten Bereich, also die zu erwärmenden Flächen wenigstens eines Siegelpartners konzentriert werden kann. Dies führt einerseits zu einer sehr effizienten und präzisen induktiven Erwärmung und andererseits zu einer Vermeidung von starken Magnetfeldern in der Umgebung. Ein weiterer Vorteil liegt in einer höheren Eindringtiefe der Magnetfelder in den wenigstens einen zu erwärmenden Siegelpartner, vorzugsweise das Siegelelement. Dies ist insbesondere im Bereich von höheren Materialstärken wichtig, um auch dort eine ausreichende Erwärmung sicherzustellen.

Auch kann es bevorzugt sein, dass die Schmelzeinrichtung, insbesondere die Hochfrequenzsiegeleinrichtung wenigstens eine Kühleinrichtung aufweist.

Dies kann die Prozessstabilität abermals erhöhen, da die sich im Prozess einstellenden Betriebstemperaturschwankungen unmittelbar am Induktor somit in engen gehalten werden können. Zudem kann die Lebensdauer der Hochfrequenzsiegeleinrichtung dadurch erhöht und unnötige Ausfälle der Vorrichtung vermieden werden.

Weiter kann es bevorzugt sein, dass die Vorrichtung eine Steuer- und/oder Regeleinheit und vorzugsweise eine Detektoreinheit aufweist.

Mittels einer Steuer- und/oder Regeleinheit lassen sich die Parameter zum Betreiben der Vorrichtung sehr komfortabel auf die jeweiligen Anforderungen einstellen. Zudem kann eine Steuer- und/oder Regeleinrichtung auch zu Zwecken der Qualitätskontrolle eingesetzt werden, insbesondere dann, wenn die Vorrichtung ferner eine Detektoreinheit aufweist- Die Detektoreinheit weist dann vorzugsweise wenigstens einen Sensor auf.

Dann kann die Vorrichtung beispielsweise dazu ausgebildet sein bei einem beschriebenen Verfahren in abhängigem Wirkzusammenhang mit der Durchführung des Schrittes f) und einer dabei wenigstens an dem Siegelelement erzeugten Formänderungsarbeit, eine Drehwinkeländerung der Schraubkappe zu erfassen und über eine Verbindung zu der Steuer- und/oder Regeleinrichtung eine entsprechende Weiterleitung zu ermöglichen, sodass die detektierte Drehwinkeländerung beispielsweise in einem Schrittj) in der dazu ausgebildeten Steuer- und/oder Regeleinheit mit einem Sollwert verglichen werden kann und vorzugsweise die aus dem Vergleich gewonnenen Erkenntnisse im Zusammenhang der Qualitätsüberwachung und/oder zur Steuerung oder Regelung der vorliegenden und/oder nachfolgender Anbringungsvorgänge nutzbar gemacht sind.

Es kann bevorzugt sein, dass der Vorrichtung ein Behälteraufnahmebereich zuzuordnen ist, der wenigstens eine Abstützfläche zur wenigstens teilweisen Aufnahme einer Gewichtskraft des wenigstens einen Behälters aufweist, wobei die Vorrichtung bevorzugt eine Hubeinheit umfasst, mittels der der Aufnahmebereich und die Abstützfläche relativ zueinander, insbesondere aufeinander zu und/oder voneinander weg, bewegbar sind.

Durch eine derartige Zuordnung ist die Vorrichtung besonders vorteilhaft in eine Füllanlage integrierbar und kann so mit Vorteil auch Teil der Anlage werden, unabhängig davon, ob der Behälteraufnahmebereich letztlich der Vorrichtung an sich zugehörig oder wie vorgeschlagen lediglich zugeordnet ist.

Sofern vorgesehen kann dann die Steuer- und/oder Regeleinrichtung der Vorrichtung in Wirkverbindung mit einer Steuer- und/oder Regeleinrichtung einer solchen Füllanlage stehen oder sogar durch diese gebildet sein.

Weiter kann der Prozess bei Nutzung der Vorrichtung zur Durchführung eines hier beschriebenen Verfahrens auf Grund der definierten Zuordnung noch einmal zusätzlich stabilisiert werden, wobei die Hubeinheit zur unmittelbaren Einwirkung auf den Siegelprozess nutzbar ausgebildet sein kann.

Vorzugsweise ist die Schraubdeckelaufnahme unter Zuhilfenahme eines Antriebs um eine Rotationsachse in Rotation versetzbar, wobei der Aufnahmeraum unter Zuhilfenahme, der Hubeinheit In axialer Richtung entlang der Rotationsachse bewegbar angeordnet ist.

Dadurch, dass die Schraubdeckelaufnahme in Rotation versetzbar ist, kann der Schraubdeckel energieeffizient und rasch beschleunigt werden, wodurch das Verschließen eines Behälters besonders preisgünstig und schnell vollzogen werden kann. Zudem bildet das System auf diese Weise eine nur geringe Trägheit aus, was wiederum den erreichbaren Grad der Definiertheit der Zuordnung und Wirkung der einzelnen Verfahrensschritte, die zum Verschließen und vorzugswiese zum Versiegeln eines Behälters notwendig sind, erhöht.

Durch Trennung der die Rotationsbewegung einleitenden und/oder Vorrichtungsmerkmale gegenüber den die Linearbewegung ("Hub") einleitenden und/oder ausführenden Vorrichtungsmerkmalen ist die Vorrichtung insgesamt verhältnismäßig preiswert und robust auch unter Beachtung der Richtlinien zur aseptischen Gestaltung herstellbar.

So ist es schließlich ganz besonders bevorzugt, dass die Vorrichtung zur Durchführung eines Verfahrens gemäß einem der Ansprüche 1 bis 13 ausgebildet ist, wobei die sich daraus ergebenden Vorteile dem Offenbarungsgehalt der vorliegenden Anmeldung zu entnehmen sind.

Im Folgenden wird eine bevorzugte Ausgestaltung der Erfindung anhand der Figuren einer einzigen Zeichnung näher erläutert. Die Beschreibung der bevorzugten Ausgestaltung ist dabei keines Falls als abschließend zu betrachten.

### Es zeigen:

- Figur 1:: Diagrammdarstellung einzelner Abläufe von ausgewählten Verfahrensschritten über eine fortlaufende Zeitachse
- Figur 2:: Detaildarstellung aus Figur 1
- Figur 3a:: Frontansicht der Vorrichtung in Form eines ersten bevorzugten Ausführungsbeispiels in teilgeschnittener Darstellung und in einer ersten Position
- Figur 3b:: Frontansicht der Vorrichtung in Form eines ersten bevorzugten Ausführungsbeispiels in teilgeschrittener Darstellung und in einer zweiten Position
- Figur 4a:: Frontansicht der Vorrichtung in Form eines zweiten bevorzugten Ausführungsbeispiels in teilgeschnittener Darstellung und in einer ersten Position
- Figur 4b:: Frontansicht der Vorrichtung in Form eines zweiten bevorzugten Ausführungsbeispiels in teilgeschnittener Darstellung und in einer zweiten Position
- Figur 5a:: Frontansicht der Vorrichtung in Form eines dritten bevorzugten Ausführungsbeispiels in teilgeschnittener Darstellung und in einer ersten Position
- Figur 5b:: Frontansicht der Vorrichtung in Form eines dritten bevorzugten Ausführungsbeispiels in teilgeschnittener Darstellung und in einer zweiten Position
- Figur 6:: Ausführungsbeispiel eines Schraubdeckels mit Siegelelement

In den die Zeichnung bildenden Figuren sind jeweils gleiche Teile und Verfahrensabschnitte mit gleichen Bezugszeichen versehen. Entsprechend werden nicht alle Teile und Verfahrensschritte auch in allen Figuren wiedergeben und/oder bezeichnet. Vielmehr erschließt sich dem Fachmann der Offenbarungsgehalt der Figurenbeschreibung aus der Zusammenschau der in der Zeichnung enthaltenen Figuren und deren Beschreibung.

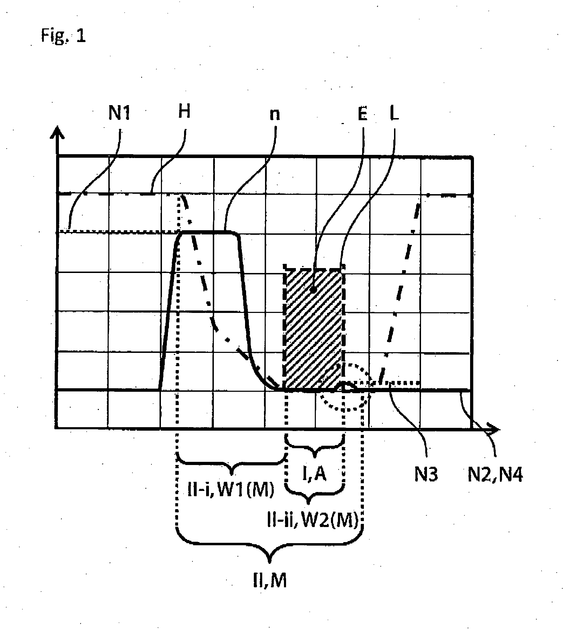

Dabei sind wenigstens wesentliche Aspekte eines Ablaufs eines Verfahrens zum Anbringen eines Siegelelementes 1 und eines, ein Muttergewinde 2 aufweisenden, Schraubdeckels 3 an eine Mündung 4 eines Behälters 5, wobei die Mündung 4 des Behälters 5 eine Mündungswand 6 umfasst deren Außenseite 7 wenigstens bereichsweise ein Schraubengewinde 8 aufweist und die Mündung 4 wenigstens durch bereichsweises Schmelzen des Siegelelements 1 aufbrechbar versiegelt und durch das Anbringen des Schraubdeckels 3 öffenbar verschlossen wird, aus der Diagrammdarstellung der Figur 1 zu entnehmen, wobei das dargestellte Verfahren folgende umfassend Schritte umfasst:
a) Bereitstellen einer Vorrichtung 9 zum Versiegeln und Verschließen von Behältern 5, b) Bereitstellung eines Schraubdeckels 3, c) Bereitstellen eines Siegelelements 1, d) temporäre Einlagerung wenigstens des Schraubdeckels 3 in eine Schraubdeckelaufnahme 10 einer Behälterverschließeinrichtung 11, e) Auflage des Siegelelements 1 auf die Mündung 4 des Behälters 5, f) Versiegeln der Mündung 4 des Behälters 5 wenigstens durch bereichsweises Schmelzen des Siegelelements 1, unter Inanspruchnahme eines ersten Zeitintervalls I, g) Positionieren eines Anfangsbereichs 2a des Muttergewindes 2 zu einem Anfangsbereich 8a des Schraubgewindes 8, h) Verschließen der Mündung 4 des Behälters 5 durch Aufschrauben des Schraubdeckels 3 unter Inanspruchnahme eines zweiten Zeitintervalls II und dadurch charakterisiert ist, dass das zweite Zeitintervall II wenigstens einen Anteil A des ersten Zeitintervalls I überdeckt.

Auch wenn zur Nachvollziehbarkeit eines Teils der genannten Verfahrensschritte hier nochmals auf die Zusammenschau mit den anderen Figuren verwiesen sein soll, ist der qualitativ zu verstehenden, diagrammartigen Darstellung der Figur 1 besonders eingängig zu entnehmen, dass das zweite Zeitintervall II wenigstens einen Anteil A des ersten Zeitintervalls I überdeckt. Das zweite Zeitintervall II überdeckt darstellungsgemäß wenigstens 75%, bevorzugt wenigstens 90% des ersten Zeitintervalls I, und überdeckt dabei sogar, wie gezeigt, ganz besonders bevorzugt das erste Zeitintervall I vollständig.

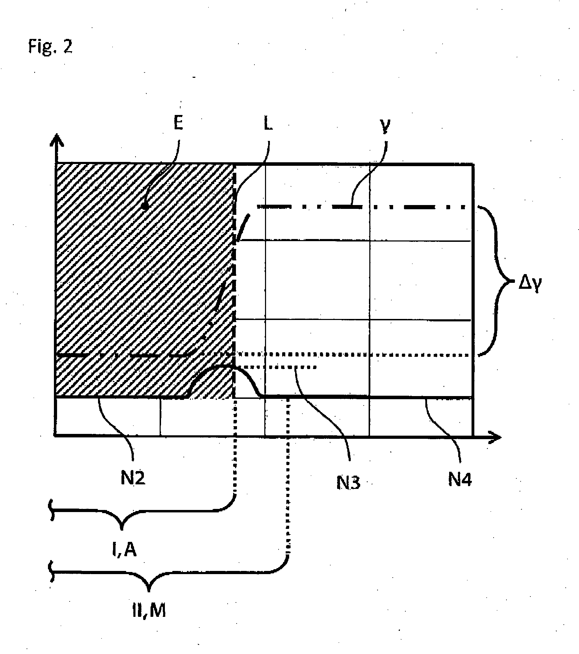

Dazu ist in Figur 1 und der in Figur 2 dargestellten, zugehörigen Detailansicht, der Verlauf der Drehzahl n der Schraubdeckelaufnahme 10 unter deren Einwirkung das Verschließen der Mündung 4 des Behälters 5 durch Aufschrauben des Schraubdeckels 3 unter Inanspruchnahme des zweiten Zeitintervalls II als durchgezogene Linie dargestellt. Im Bildbereich des Diagramms ist ein einzelner Zyklus eines zweiten Zeitintervalls II dargestellt in dessen weiterer Folge des Zeitverlaufs an der sich zur rechten Bildseite der Figur 1 erstreckenden Zeitachse eine, hier nicht näher bezeichnete, Totzeit bis zur erneuten Ausbildung eines zweiten Zeitintervalls II anschließen kann. Alternativ kann das zweite Zeitintervall II sich auch in derart weiter entlang der Zeitachse erstrecken, dass ein folgendes zweites Zeitintervall II, oder mit anderen Worten ein zweiter Zyklus des zweiten Zeitintervalls II sich unmittelbar an das dargestellte zweite Zeitintervall II anschließen kann, obwohl das zweite Zeitintervall II mit (erneutem) Einsatz der in strichpunktartiger Darstellung gezeigten Hubbewegung H der Schraubdeckelaufnahme 10 an sich als technisch abgeschlossen zu bezeichnen ist. Zur exakten Definierbarkeit des zweiten Zeitintervalls II kann der Fachmann dabei insbesondere sogar davon beim Studium der Figur 1 ausgehen, dass das zweite Zeitintervall II durch Anliegen eines, auf die Schraubdeckelaufnahme 10 wirkenden, Drehmoments M charakterisiert sein soll.

Der zum Versiegeln der Mündung 4 des Behälters 5 wenigstens durch bereichsweises Schmelzen des Siegelelements 1, vorzunehmende Leistungseintrag L ist durch einen gestrichelten Linienverlauf dargestellt. Das sich unter dem Verlauf ausbildende Integral entspricht dem Energieeintrag E und erfolgt unter Inanspruchnahme eines ersten Zeitintervalls I.

Die unterschiedlichen Linienverläufe erheben sich über die Zeitachse entlang einer normierten Achse.

Der dargestellte Verlauf der Drehzahl n der Schraubdeckelaufnahme 10 erreicht während der Durchführung des Schrittes h) chronologisch aufeinanderfolgend ein erstes Drehzahlniveau N1, ein zweites Drehzahlniveau N2, ein drittes Drehzahlniveau N3 und ein viertes Drehzahlniveau N4, wobei das erste Drehzahlniveau N1 größer ist als das dritte Drehzahlniveau N3, wobei das dritte Drehzahlniveau N3 größer ist als das zweite Drehzahlniveau N2 und das vierte Drehzahlniveau N4, wobei das zweite Drehzahlniveau N2 größer oder gleichgroß zum vierten Drehzahlniveau N4 ist.

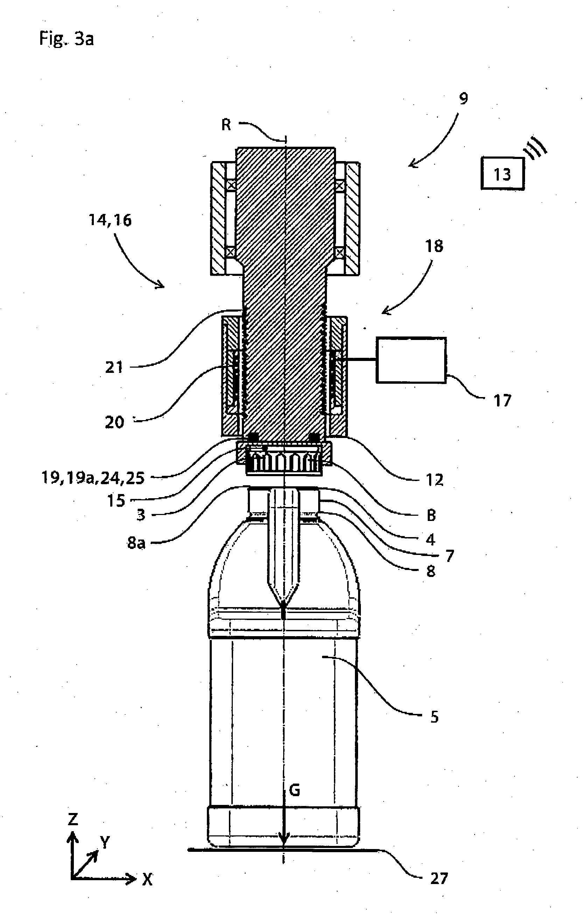

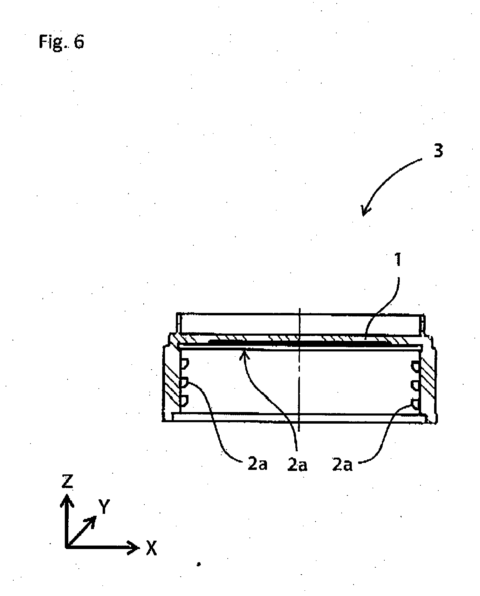

Dabei steht das dritte Drehzahlniveau N3 in abhängigem Wirkzusammenhang mit der Durchführung des Schrittes f), wobei in abhängigem Wirkzusammenhang mit der Durchführung des Schrittes f) und einer dabei wenigstens an dem Siegelelement 1 erzeugten Formänderungsarbeit, eine, der Figur 2 besonders eingängig zu entnehmende, Drehwinkeländerung Δγ des Schraubdeckels 3 veranlasst wird, die vorzugsweise in einem Schritt i) durch eine dazu vorgesehene, in wenigstens einer der Figuren 3a bis 5b dargestellten, Detektoreinheit 12 detektiert wird. Die auf diese Weise detektierte Drehwinkeländerung Δγ des Drehwinkels y, dessen Verlauf ebenfalls in Figur 2 qualitativ dargestellt ist, kann dann vorzugsweise in einem Schritt j) in einer dazu vorgesehenen, ebenfalls in wenigstens einer der Figuren 3a bis 5b gezeigten, Steuer- und/oder Regeleinheit 13 mit einem Sollwert verglichen werden, wobei vorzugsweise die aus dem Vergleich gewonnenen Erkenntnisse im Zusammenhang der Qualitätsüberwachung und/oder zur Steuerung oder Regelung der vorliegenden und/oder nachfolgender Anbringungsvorgänge genutzt werden können. Ein Anbringungsvorgang umfasst dabei, unter Voraussetzung der unter den Schritten a) bis c) erfolgten Bereitstellungen zumindest die Verfahrensschritte d) bis h). Dementsprechend ist in Figur 1 ein einzelner Anbringungsvorgang dargestellt. Weitere Anbringungsvorgänge schließen sich, in nicht dargestellter Weise, entsprechend unter weiterer Verfolgung des Zeitstrahls an den dargestellten Anbringungsvorgang an, dessen apparative Umgebung insbesondere den Figuren 3a bis 5b und der dort dargestellten Vorrichtung 9 und dem gezeigten Behälter 5, sowie des Schraubdeckels 3 mit eingelegtem Siegelelement 1 zu entnehmen ist. Zur Darstellung eines bevorzugten Aufbaus eines beispielhaft gewählten Schraubdeckels 3 mit einem in dessen Bodenbereich 3a eingebrachten und wenigstens temporär fixierten Siegelelements 1 dient ergänzend dazu die Figur 6.

Weiter kann der Figur 1 entnommen werden, dass in der dargestellten, bevorzugten Ausgestaltung des Verfahrens, das zweite Zeitintervall II wenigstens ein erstes Teilintervall II-i und ein zweites Teilintervall II-ii umfasst, wobei das erste Teilintervall II-i frei von einer Überdeckung des zweiten Zeitintervalls II-ii ist und das zweite Teilintervall II-ii durch das Vorliegen der Überdeckung des ersten Zeitintervalls I charakterisiert ist und wobei das, das zweite Zeitintervall II charakterisierende Drehmoment M im zweiten Teilintervall II-ii einen gemittelten Zweitwert W2 annimmt, der von einem, im ersten Teilintervall I angenommenen, gemittelten. Erstwert W1, um maximal 20%, vorzugsweise um maximal 10%, ganz vorzugsweise um weniger als 5%abweicht. Mit anderen Worten ist das Verfahren also frei von einer aufwendigen Drehmomenten-Regelung. Vielmehr kann der dargestellte Linienverlauf des Diagramms dadurch erreicht werden, dass das wirksame Drehmoment konstant oder wenigstens quasikonstant gehalten wird,

Dabei ist weiter zu erkennen, dass das erste Teilintervall II-i nach Abschluss des Schrittes g) bis zum Abschluss des Schrittes h) dauert.

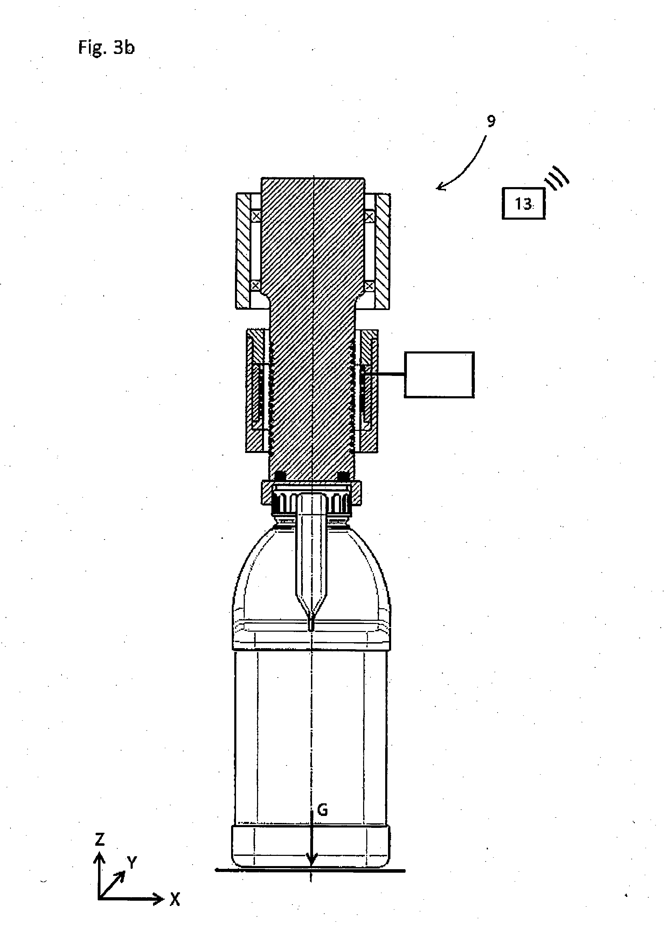

Die Figuren 3a und 3b zeigen nun ein erstes bevorzugtes Ausführungsbeispiel der Vorrichtung 9, wobei Figur 3a einen Zustand vor dem unmittelbaren Anbringen eines Siegelelementes 1 und des, das Muttergewinde 2 aufweisenden, Schraubdeckels 3 an eine Mündung 4 des dargestellten Behälters 5, zeigt, während Figur 3b den Zustand während der Durchführung der Verfahrensschritte h) und f) dokumentiert.

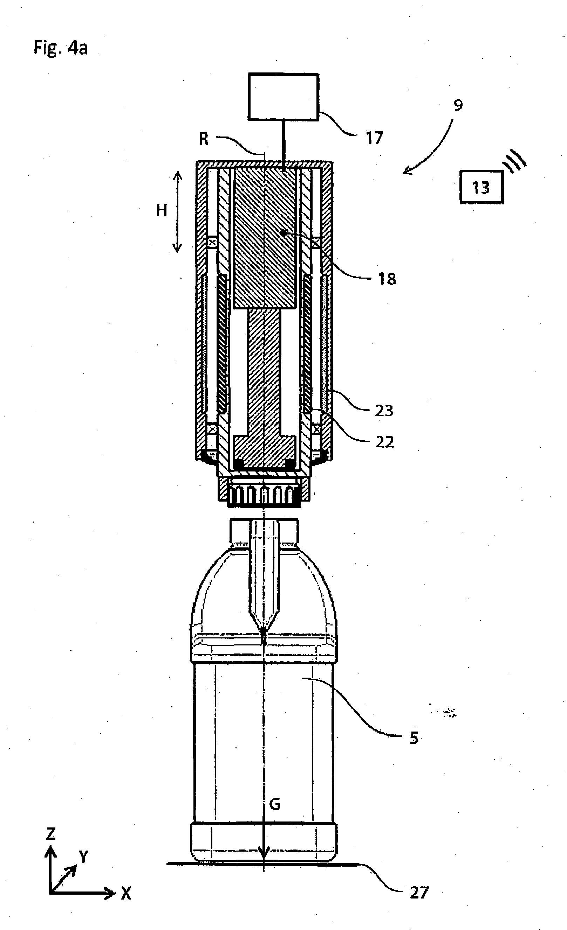

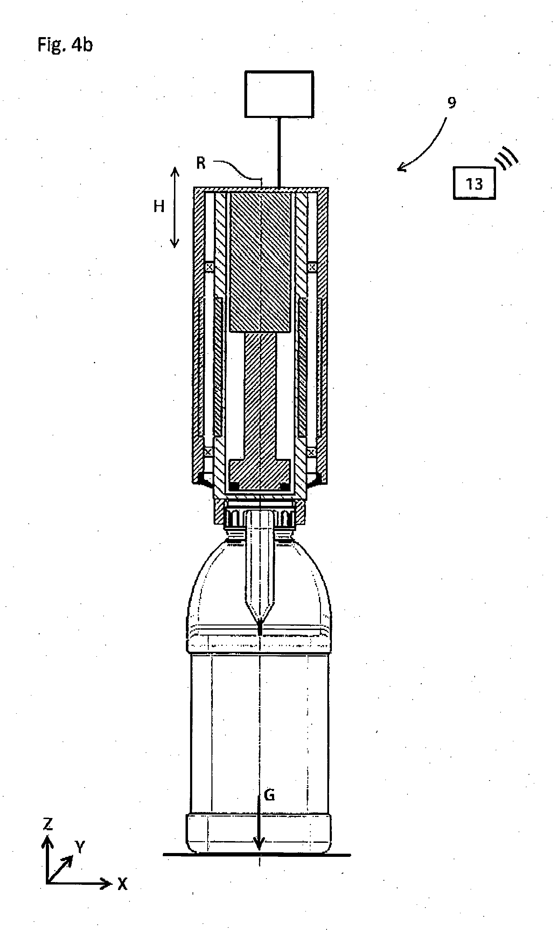

Die Figuren 4a und 4b zeigen entsprechend ein zweites bevorzugtes Ausführungsbeispiel der Vorrichtung 9, wobei Figur 4a wieder einen Zustand vor dem unmittelbaren Anbringen eines Siegelelementes 1 und des, das Muttergewinde 2 aufweisenden, Schraubdeckels 3 an eine Mündung 4 des dargestellten Behälters 5, zeigt, während Figur 4b wieder den Zustand während der Durchführung der Verfahrensschritte h) und f) dokumentiert.

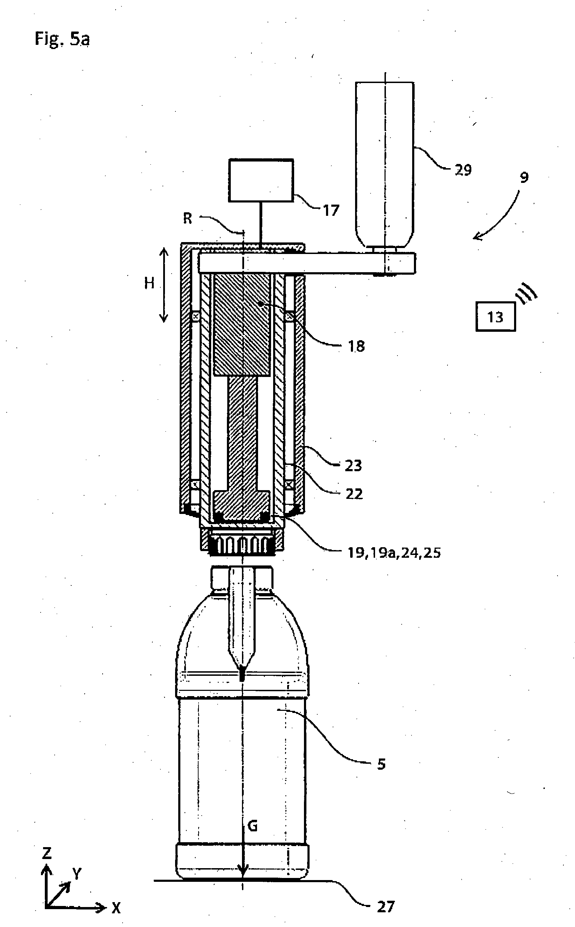

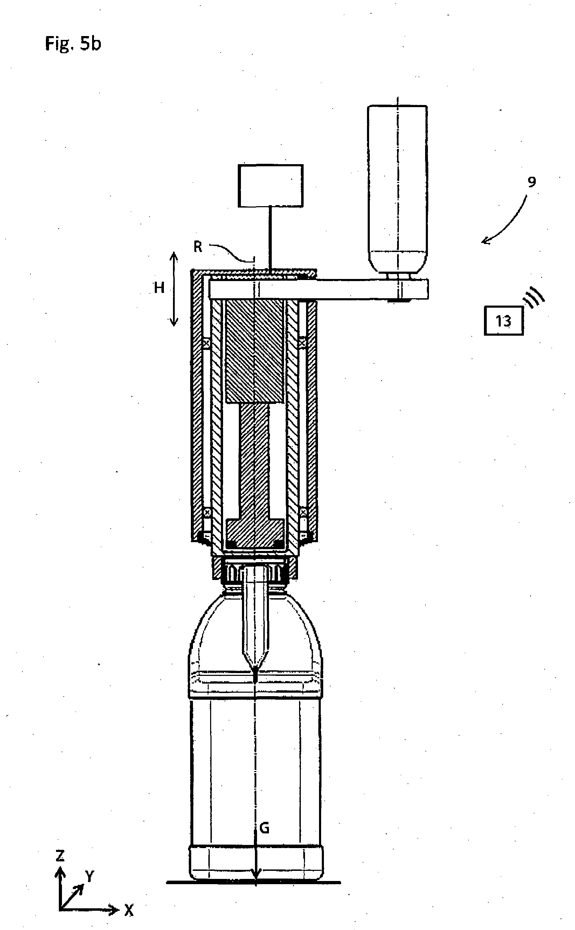

Ergänzend dazu zeigen Figuren 5a und 5b noch ein weiteres bevorzugtes Ausführungsbeispiel der Vorrichtung 9, wobei Figur 5a einen Zustand vor dem unmittelbaren Anbringen eines Siegelelementes 1 und des, das Muttergewinde 2 aufweisenden, Schraubdeckels 3 an eine Mündung 4 des dargestellten Behälters 5, zeigt, während Figur 5b den Zustand während der Durchführung der Verfahrensschritte h) und f) unter Anwendung des dritten bevorzugten Ausführungsbeispiels der dazu ausgestalteten Vorrichtung 9 dokumentiert.

Allen drei genannten Figurenpaaren ist dabei gemeinsam, dass ihr Offenbarungsgehalt bezüglich des unter Anwendung der dort dargestellten Vorrichtung 9 durchzuführenden Verfahrens bevorzugt ist, dass Schritt g) vor Schritt e) vorgenommen wird und weiter das Schritt b) und Schritt c) zeitgleich durchgeführt werden und dazu vorzugsweise das Siegelelement 1 zuvor in einen Bodenbereich 3a des Schraubdeckels 3 eingebracht und dort besonders vorzugsweise wenigstens temporär fixiert worden ist. Es ist in diesem Zusammenhang selbstverständlich das die dargestellte Vorrichtung 9 im Zusammenhang mit der Durchführung des Schrittes a) eines beschriebenen Verfahrens bereitgestellt sein kann und ebenfalls für die Bereitstellung eines Siegelelements 1 und eines Schraubdeckels 3 gesorgt ist.

Weiterhin ist allen drei Figurenpäaren gemeinsam, dass vorrichtungsgemäß zur Durchführung des Schritts f) eine Hochfrequenzsiegeleinrichtung 14 vorgesehen ist, die jeweilige Schmelzeinheit 16 also eine Hochfrequenzsiegeleinrichtung 14 aufweist. Zwar sind vorrichtungsgemäß auch andere Siegeleinrichtungen denkbar, allerdings sind im Zusammenhang mit dem hier beschriebenen Verfahren und der hier beschriebenen Vorrichtung die Vorteile des Vorsehens einer Hochfrequenzsiegeleinrichtung und eine Durchführung des Verfahrensschritts f) unter deren Mitwirkung von so großem Vorteil, dass alle drei Figurenpaare eine solche Hochfrequenzsiegeleinrichtung vorsehen. Dabei weist die Hochfrequenzsiegeleinrichtung 14 jeweils zumindest ein Netzteil 17 und einen Schwingkreis 18 mit einem Induktor 19 auf. In den dargestellten Ausführungsbeispielen ist jeweils ein Teil der energieführenden Bauteile wenigstens mittelbar mit dem Netzteil 17 verbunden. Beispielsweise zwischengeschaltete oder in anderer elektronischer Schaltweise verbundene Bauelemente, wie wenigstens ein Kondensator, wenigstens eine Schalteinheit oder Ähnliches, sind nicht dargestellt.

Weiter ist gemäß allen drei Ausführungsbeispielen vorgesehen, dass die dort jeweils gezeigte. Hochfrequenzsiegeleinrichtung 14 wenigstens einen Feldkonzentrator 24 umfasst. Natürlich kann es auch vorgesehen sein, dass die jeweilige Hochfrequenzsiegeleinrichtung 14 mehrere Feldkonzentratoren 24 aufweist. Zudem ist auch in allen drei Ausführungsbeispielen vorgesehen, dass die jeweilige Schmelzeinrichtung 16, insbesondere die dort dargestellte Hochfrequenzsiegeleinrichtung 14 wenigstens eine Kühleinrichtung 25 aufweist.

Die in den Figurenpaaren 3 bis 5 jeweils dargestellte Vorrichtung 9 zum Anbringen eines Siegelelements 1 und eines, ein Muttergewinde 2 aufweisenden, Schraubdeckels 3 an eine Mündung 4 eines Behälters 5, wobei die Vorrichtung 9 eine Behälterverschließeinrichtung 11 umfasst, die eine Schraubdeckelaufnahme 10 aufweist, wobei die Schraubdeckelaufnahme 10 einen Aufnahmeraum 15 zur temporären Einlagerung wenigstens des Schraubdeckels 3 ausbildet, wobei die Vorrichtung 9 femer eine, einen Wirkbereich B aufweisende Schmelzeinheit 16 zur wenigstens bereichsweisen Schmelzung des Siegelelements 1 aufweist, ist figurenübergreifend einheitlich dadurch charakterisiert, dass der Wirkbereich B der Schmelzeinheit 16 wenigstens anteilig innerhalb des Aufnahmeraums 15 ausgebildet ist.

Dabei sind in allen drei bevorzugten Ausführungsbeispielen wenigstens 30%, vorzugsweise wenigstens 50%, ganz vorzugsweise wenigstens 66% des Wirkbereichs B der Schmelzeinheit 16 innerhalb des Aufnahmeraums 15 ausgebildet.

Zur Durchführung des Verfahrensschritts h) ist zudem jeweils vorgesehen; dass die Schraubdeckelaufnahme 10 unter Zuhilfenahme eines Antriebs 29 um eine Rotationsachse R in Rotation versetzbar ist, wobei der Aufnahmeraum 15 unter Zuhilfenahme der Hubeinheit 28 in axialer Richtung entlang der Rotationsachse R bewegbar angeordnet ist.

Die in den Figurenpaaren 3 bis 5 jeweils dargestellte Vorrichtung 9 weist zudem jeweils eine Steuer- und/oder Regeleinheit 13 und vorzugsweise eine Detektoreinheit 12 auf. Der im jeweiligen Figurenpaar dargestellten Vorrichtungen 9 ist weiterhin gemeinsam, dass ihnen jeweils ein Behälteraufnahmebereich 26 zuzuordnen ist, der wenigstens eine Abstützfläche 27 zur wenigstens teilweisen Aufnahme einer Gewichtskraft G des wenigstens einen Behälters 5 aufweist, wobei die Vorrichtung 9 eine Hubeinheit 28 umfasst, mittels der der Aufnahmeraum 15 für den Schraubdeckel 3 und die Abstützfläche 27 relativ zueinander, insbesondere aufeinander zu und/oder voneinander weg, bewegbar sind. Der Behälteraufnahmebereich 26 kann dann jeweils durch ein endlos umlaufendes Band oder eine endlos umlaufende Kette, die gegebenenfalls auf einander folgende definierte Transportstationen ausbilden können, realisiert sein. Der Band- oder Kettenverlauf kann dann in Bildrichtung gerichtet sein.

Die Figur a) eines jeweiligen Figurenpaares 3 bis 5 zeigt die Vorrichtung 9 mit in der Schraubdeckelaufnahme 10 temporär eingelagertem Schraubdeckel oberhalb der Mündung 5 eines jeweiligen Behälters 5, wobei die jeweils zugehörige Figur b) dieselbe Vorrichtung darstellt, während die Verfahrensschritte h) und f) durchgeführt werden.

Das Figurenpaar 3a und 3b zeigt nun im Speziellen eine Ausgestaltung der Vorrichtung 9, bei der die Hochfrequenzsiegeleinrichtung 14 eine Primärspule 20 und eine Sekundärspule 21 aufweist. Dabei ist die Primärspule 20 mit einem Netzteil 17 verbunden und zur Übertragung einer entsprechenden Energie an die Sekundärspule 21 ausgebildet. Die Sekundärspule 21 ist mit dem Induktor 19 verbunden, der innerhalb seines im Verfahrensschritt f) unter Inanspruchnahme des ersten Zeitintervalls f ausgebildeten Wirkbereichs B den zur Versiegelung der Mündung 4 des Behälters notwendigen, wenigstens bereichsweises Schmelzen des Siegefelements 1 mittels des im Diagramm der Figur 1 dargestellten Energieeintrags E ausübt. Die Sekundärspule 21 und der Induktor 19 üben gemeinsam mit der Schraubdeckelaufnahme 10 die Hubbewegung H aus, die im Zusammenhang mit der Verschraubung des Schraubdeckels 3 und des in dessen Innenraum am Bodenbereich 3a fixierten Siegelelements 1 am Schraubengewinde 8 des Behälters 5 steht und sind dabei gemeinsam um die Rotationsachse R rotierbar angeordnet. Im Zusammenhang mit der Hubbewegung gelangt die in Figur 3ä dargestellte Anordnung in die Darstellung gemäß Figur 3b.

Das Figurenpaar 4a und 4b zeigt im Speziellen eine Ausgestaltung der Vorrichtung 9, bei der die Hochfrequenzsiegeleinrichtung 14 einen Rotor 22 und einen Strator 23 aufweist. Dabei ist der Rotor 22 dazu ausgebildet, um die Rotationsachse R zu rotieren. Hier ist nun der Induktor 19 (mittelbar) mit dem Netzteil 17. Der Rotor 22 ist mit dem Induktor 19 verbunden, der innerhalb seines im Verfahrensschritt f) unter Inanspruchnahme des ersten Zeitintervalls I ausgebildeten Wirkbereichs B den zur Versiegelung der Mündung 4 des Behälters notwendigen, wenigstens bereichsweises Schmelzen des Siegelelements 1 mittels des im Diagramm der Figur 1 dargestellten Energieeintrags E ausübt. Der Rotor 22 und der Induktor 19 üben gemeinsam mit der Schraubdeckelaufnahme 10 die Hubbewegung H in Z-Richtung aus, die im Zusammenhang mit der Verschraubung des Schraubdeckels 3 und des in dessen Innenraum am Bodenbereich 3a fixierten Siegelelements 1 am Schraubengewinde 8 des Behälters 5 steht und sind dabei gemeinsam um die Rotationsachse R rotierbar angeordnet. Im Zusammenhang mit der Hubbewegung gelangt die in Figur 4a dargestellte Anordnung in die Darstellung gemäß Figur 4b.

Bei dem Figurenpaar 5a und 5b ist zur Rotation der Schraubdeckelaufnahme 10 ein -extern gelagerter - Antrieb 29 vorgesehen, sodass der Induktor 19 nicht mit rotieren muss. Um eine analog zu den im Zusammenhang mit den Figurenpaaren 3 und 4 beschriebene Hubbewegung H in Z-Richtung ausführen zu können, kann der Antrieb 29 ebenfalls in Z-Richtung bewegbar angeordnet sein. Im Zusammenhang mit der Hubbewegung gelangt die in Figur 5a dargestellte Anordnung wieder entsprechend in die Darstellung gemäß Figur 5b.

Figur 6 zeigt ein Ausführungsbeispiel eines Schraubdeckels 3 mit einem Bodenbereich 3a und einem darin fixiertem Siegelelement 1. Das Muttergewinde 2 des Schraubdeckels 3 weist einen Anfangsbereich 2a auf Der Schraubdeckel 3 ist aus Kunststoff gebildet. Das Siegelelement 1 kann aus einem Laminat gebildet sein das beispielsweise eine Metalllage umfassen kann.

### Bezugszeichenliste

- 1: Siegelelement
- 2: Muttergewinde
- 2a: Anfangsbereich des Muttergewindes
- 3: Schraubdeckel
- 3a: Bodenbereich des Schraubdeckels
- 4: Mündung
- 5: Behälter
- 6: Mündungswand
- 7: Außenseite (der Mündungswand)
- 8: Schraubengewinde
- 8a: Anfangsbereich des Schraubengewindes
- 9: Vorrichtung
- 10: Schraubdeckelaufnahme
- 11: Behälterverschließeinrichtung
- 12: Detektoreinheit
- 13: Steuer- und/oder Regeleinheit
- 14: Hochfrequenzsiegeleinrichtung
- 15: Aufnahmeraum
- 16: Schmelzeinheit
- 17: Netzteil
- 18: Schwingkreis
- 19: Induktor
- 19a: Teil des Induktors
- 20: Primärspule
- 21: Sekundärspule
- 22: Rotor
- 23: Strator
- 24: Feldkonzentrator
- 25: Kühleinrichtung
- 26: Behälteraufnahmebereich
- 27: Abstützfläche
- 28: Hubeinheit
- 29: Antrieb

- I: Erstes Zeitintervall
- II: Zweites Zeitintervall
- II-i: Erstes Teilintervall des zweiten Zeitintervalls
- II-ii: Zweites Teilintervall des zweiten Zeitintervalls

- A: Anteil
- B: Wirkbereich
- E: Energieeintrag, Energie, Siegelenergie
- G: Gewichtskraft
- H: Hubbewegung, Hub
- L: Leistungseintrag
- M: Drehmoment
- n: Drehzahl
- N1: Erstes Drehzahlniveau
- N2: Zweites Drehzahlniveau
- N3: Drittes Drehzahlniveau
- N4: Viertes Drehzahlniveau
- R: Rotationsachse
- W1: Erstwert
- W2: Zweitwert
- X: Raumrichtung (Längsrichtung)
- Y: Raumrichtung (Breitenrichtung)
- Z: Raumrichtung (Höhenrichtung)

- γ: Drehwinkel
- Δγ: Drehwinkeländerung

## Patentansprüche

1. Verfahren zum Anbringen eines Siegelelementes (1) und eines, ein Muttergewinde (2) aufweisenden, Schraubdeckels (3) an eine Mündung (4) eines Behälters (5), wobei die Mündung (4) des Behälters (5) eine Mündungswand (6) umfasst deren Außenseite (7) wenigstens bereichsweise ein Schraubengewinde (8) aufweist und die Mündung (4) wenigstens durch bereichsweises Schmelzen des Siegelelements (1) aufbrechbar versiegelt und durch das Anbringen des Schraubdeckels (3) öffenbar verschlossen wird, umfassend folgende Schritte:
a) Bereitstellen einer Vorrichtung (9) zum Versiegeln und Verschließen von Behältern (5)
b) Bereitstellung eines Schraubdeckels (3)
c) Bereistellen eines Siegelelements (1)
d) temporäre Einlagerung wenigstens des Schraubdeckels (3) in eine Schraubdeckelaufnahme (10) einer Behälterverschließeinrichtung (11)
e) Auflage des Siegelelements (1) auf die Mündung (4) des Behälters (5)
f) Versiegeln der Mündung (4) des Behälters (5) wenigstens durch bereichsweises Schmelzen des Siegelelements (1), unter Inanspruchnahme eines ersten Zeitintervalls (I)
g) Positionieren eines Anfangsbereichs (2a) des Muttergewindes (2) zu einem Anfangsbereich (8a) des Schraubgewindes (8)
h) Verschließen der Mündung (4) des Behälters (5) durch Aufschrauben des Schraubdeckels (3) unter Inanspruchnahme eines zweiten Zeitintervalls (II)
**dadurch gekennzeichnet, dass**
das zweite Zeitintervall (II) wenigstens einen Anteil (A) des ersten Zeitintervalls (I) überdeckt.

2. Verfahren nach Anspruch 1,
**dadurch gekennzeichnet, dass**
das zweite Zeitintervali (II) wenigstens 75%, bevorzugt wenigstens 90% des ersten Zeitintervalls (I) überdeckt, ganz besonders bevorzugt das erste Zeitintervall (I) vollständig überdeckt.

3. Verfahren nach einem der beiden vorhergehenden Ansprüche,
**dadurch gekennzeichnet, dass**
das zweite Zeitintervall (II) durch Anliegen eines, auf die Schraubdeckelaufnahme (10) wirkenden, Drehmoments (M) charakterisiert ist.

4. Verfahren nach einem der vorhergehenden Ansprüche,
**dadurch gekennzeichnet, dass**
die Schraubdeckelaufnahme (10) während der Durchführung des Schrittes h) chronologisch aufeinanderfolgend ein erstes Drehzahlniveau (N1), ein zweites Drehzahiniveau (N2), ein drittes Drehzahlniveau (N3) und ein viertes Drehzahlniveau (N4) erreicht, wobei das erste Drehzahlniveau (N1) größer ist als das dritte Drehzahlniveau (N3), wobei das dritte Drehzahlniveau (N3) größer ist als das zweite. Drehzahlniveau (N2) und das vierte Drehzahlniveau (N4), wobei das zweite Drehzahlniveau (N2) größer oder gleichgroß zum vierten Drehzahlniveau (N4) ist.

5. Verfahren nach einem dem vorhergehenden Anspruch,
**dadurch gekennzeichnet, dass**
das dritte Drehzahlniveau (N3) in abhängigem Wirkzusammenhang mit der Durchführung des Schrittes f) steht.

6. Verfahren nach einem der Ansprüche 3 bis 5,
**dadurch gekennzeichnet, dass**
in abhängigem Wirkzusammenhang mit der Durchführung des Schrittes f) und einer dabei wenigstens an dem Siegelelement (1) erzeugten Formänderungsarbeit, eine Drehwinkeländerung (Δ*γ*) des Schraubdeckels (3) veranlasst wird, die vorzugsweise in einem Schritt i) durch eine dazu vorgesehene Detektoreinheit (12) detektiert wird.

7. Verfahren nach dem vorhergehenden Anspruch,
**dadurch gekennzeichnet, dass**
die detektierte Drehwinkeländerung (Δ*γ*) in einem Schritt j) in einer dazu vorgesehenen Steuer- und/oder Regeleinheit (13) mit einem Sollwert verglichen wird und vorzugsweise die aus dem Vergleich gewonnenen Erkenntnisse im Zusammenhang der Qualitätsüberwachung und/oder zur Steuerung oder Regelung der vorliegenden und/oder nachfolgender Anbringungsvorgänge genutzt werden.

8. Verfahren nach einem der Ansprüche 6 oder 7,
**dadurch gekennzeichnet, dass**
das zweite Zeitintervall (II) wenigstens ein erstes Teilintervall (II-i) und ein zweites Teilintervall (II-ii) umfasst, wobei das erste Teilintervall (II-i) frei von einer Überdeckung des zweiten Zeitintervalls (II-ii) ist und das zweite Teilintervall (II-ii) durch das Vorliegen der Überdeckung des ersten Zeitintervalls (I) charakterisiert ist und wobei das, das zweite Zeitintervall (II) charakterisierende Drehmoment (M) im zweiten Teilintervall (II-ii) einen gemittelten Zweitwert (W2) annimmt, der von einem, im ersten Teilintervall (I) angenommenen, gemittelten Erstwert (W1), um maximal 20%, vorzugsweise um maximal 10%, ganz vorzugsweise um weniger als 5% abweicht.

9. Verfahren nach dem vorhergehenden Anspruch,
**dadurch gekennzeichnet, dass**
das erste Teilintervall (II-i) nach Abschluss des Schrittes g) bis zum Abschluss des Schrittes h) dauert.

10. Verfahren nach einem der vorhergehenden Ansprüche,
**dadurch gekennzeichnet, dass**
Schritt f) unter Zuhilfenahme einer Hochfrequenzsiegeleinrichtung (14) durchgeführt wird.

11. Verfahren nach einem der vorhergehenden Ansprüche,
**dadurch gekennzeichnet, dass**
Schritt g) vor Schritt e) vorgenommen wird.

12. Verfahren nach einem der vorhergehenden Ansprüche,
**dadurch gekennzeichnet, dass**
Schritt b) und Schritt c) zeitgleich durchgeführt werden und dazu vorzugsweise das Siegelelement (1) zuvor in einen Bodenbereich (3a) des Schraubdeckels (3) eingebracht und dort besonders vorzugsweise wenigstens temporär fixiert worden ist.

13. Verfahren nach einem der vorhergehenden Ansprüche,
**dadurch gekennzeichnet, dass**
in Schritt a) eine Vorrichtung (9) gemäß einem der Ansprüche 14 bis 27 bereitgestellt wird.

14. Vorrichtung (9) zum Anbringen eines Siegelelements (1) und eines, ein Muttergewinde (2) aufweisenden, Schraubdeckels (3) an eine Mündung (4) eines Behälters (5), wobei die Vorrichtung (9) eine Behälterverschließeinrichtung (11) umfasst, die eine Schraubdeckelaufnahme (10) aufweist, wobei die Schraubdeckelaufnahme (10) einen Aufnahmeraum (15) zur temporären Einlagerung wenigstens des Schraubdeckels (3) ausbildet, wobei die Vorrichtung (9) ferner eine, einen Wirkbereich (B) aufweisende Schmelzeinheit (16) zur wenigstens bereichsweisen Schmelzung des Siegelelements (1) aufweist,
**dadurch gekennzeichnet, dass**
der Wirkbereich (B) der Schmelzeinheit (16) wenigstens anteilig innerhalb des Aufnahmeraums (15) ausgebildet ist.

15. Vorrichtung (9) nach dem vorhergehenden Anspruch,
**dadurch gekennzeichnet, dass**
wenigstens 30%, vorzugsweise wenigstens 50%, ganz vorzugsweise wenigstens 66% des Wirkbereichs (B) der Schmelzeinheit (16) innerhalb des Aufnahmeraums (15) ausgebildet ist.

16. Vorrichtung (9) nach einem der vorhergehenden Ansprüche,
**dadurch gekennzeichnet, dass**
die Schmelzeinheit (16) eine Hochfrequenzsiegeleinrichtung (14) aufweist.

17. Vorrichtung (9) nach dem vorhergehenden Anspruch,
**dadurch gekennzeichnet, dass**
die Hochfrequenzsiegeleinrichtung (14) ein Netzteil (17) und einen Schwingkreis (18) mit einem Induktor (19) aufweist

18. Vorrichtung (9) nach Anspruch 17,
**dadurch gekennzeichnet, dass**,
der Aufnahmeraum (15) um eine Rotationsachse (R) drehbar angeordnet ist und wenigstens ein Teil (19a) des Induktors (19) um dieselbe Rotationsachse (R) drehbar angeordnet ist.

19. Vorrichtung (9) nach Anspruch 17,
**dadurch gekennzeichnet, dass**
der Aufnahmeraum (15) um eine Rotationsachse (R) drehbar angeordnet ist und der Induktor (19) starr gegenüber dieser Rotationsachse (R) angeordnet ist.

20. Vorrichtung (9) nach einem der drei vorhergehenden Ansprüche,
**dadurch gekennzeichnet, dass**
die Hochfrequenzsiegeleinrichtung (14) eine Primärspule (20) und eine Sekundärspule (21) aufweist.

21. Vorrichtung (9) nach einem der Ansprüche 16 bis 18,
**dadurch gekennzeichnet, dass**
die Hochfrequenzsiegeleinrichtung (14) einen. Rotor (22) und einen Strator (23) aufweist.

22. Vorrichtung (9) nach einem der vorhergehenden Ansprüche,
**dadurch gekennzeichnet, dass**
die Hochfrequenzsiegeleinrichtung (14) wenigstens einen Feldkonzentrator (24) umfasst.

23. Vorrichtung (9) nach einem der vorhergehenden Ansprüche,
**dadurch gekennzeichnet, dass**
die Schmelzeinrichtung (16), insbesondere die Hochfrequenzsiegeleintichtung (14) wenigstens eine Kühleinrichtung (25) aufweist.

24. Vorrichtung (9) nach einem der vorhergehenden Ansprüche,
**dadurch gekennzeichnet, dass**
die Vorrichtung (9) eine Steuer- und/oder Regeleinheit (13) und vorzugsweise eine Detektoreinheit (12) aufweist.

25. Vorrichtung (9) nach einem der vorhergehenden Ansprüche,
**dadurch gekennzeichnet, dass**
der Vorrichtung (9) ein Behälteraufnahmebereich (26) zuzuordnen ist, der wenigstens eine Abstützfläche (27) zur wenigstens teilweisen Aufnahme einer Gewichtskraft (G) des wenigstens einen Behälters (5) aufweist, wobei die Vorrichtung (9) eine Hubeinheit (28) umfasst, mittels der der Aufnahmeraum (15) für den Schraubdeckel (3) und die Abstützfläche (27) relativ zueinander, insbesondere aufeinander zu und/oder voneinander weg, bewegbar sind.

26. Vorrichtung (9) nach einem der vorhergehenden Ansprüche,
**dadurch gekennzeichnet, dass**
die Schraubdeckelaufnahme (10) unter Zuhilfenahme eines Antriebs (29) um eine Rotationsachse (R) in Rotation versetzbar ist, wobei der Aufhahmeraum (15) unter Zuhilfenahme der Hubeinheit (28) in axialer Richtung entlang der Rotationsachse (R) bewegbar angeordnet ist.

27. Vorrichtung (9) nach einem der vorhergehenden Ansprüche,
**dadurch gekennzeichnet, dass**
die Vorrichtung (9) zur Durchführung eines Verfahrens gemäß einem der Ansprüche 1 bis 13 ausgebildet ist.
